# EUROPEAN PATENT APPLICATION

(11) **EP 4 654 709 A1**
(43) Date of publication of application: **26.11.2025**
(21) Application number: 23916820.6
(22) Date of filing: 20.01.2023
(51) Int. Cl.: H04W 72/0453

(54) **METHOD AND APPARATUS FOR PERFORMING COMMUNICATION OPERATION, COMMUNICATION APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/073334
(87) International publication number: WO 2024/152342

(57) **Abstract**

The present disclosure relates to the technical field of communication and in particular to a method and an apparatus for performing a communication operation, a communication apparatus, and a storage medium. The method for performing a communication operation comprises: determining a first transmission direction corresponding to a semi-static flexible time domain unit according to dynamic instruction information sent by a network device, wherein the flexible time domain unit is configured to have a sub-band, and the sub-band corresponds to a second transmission direction; and performing a communication operation on the flexible time domain unit according to the first transmission direction or according to the relationship between the first transmission direction and the second transmission direction. According to the present disclosure, for the flexible time domain unit configured to have a sub-band, a terminal can determine how to transmit data on the flexible time domain unit when the instruction information indicates the first transmission direction corresponding to the flexible time domain unit, which is beneficial to avoid problems in communication operations performed by the terminal.

## Description

### TECHNICAL FIELD

The disclosure relates to the field of communication technologies, and in particular to methods and apparatuses for performing a communication operation, a communication system, a communication device, and a computer-readable storage medium.

### BACKGROUND

In order to improve communication efficiency, a network device may configure an uplink subband for the terminal in a downlink slot, schedule the terminal to perform uplink communication in the uplink subband and/or to receive downlink transmission with frequency domain resources outside the uplink subband in the downlink slot. In this way, duplex communication may be achieved, but this will also bring some problems.

### SUMMARY

Embodiments of the disclosure provide methods for performing a communication operation, apparatuses for performing a communication operation, a communication system, a communication device, and a computer-readable storage medium to solve technical problems in related arts.

According to a first aspect of embodiments of the disclosure, a method for performing a communication operation is provided. The method is performed by a terminal. The method includes: determining a first transmission direction corresponding to a semi-static flexible time domain unit based on dynamic indication information sent by a network device, in which the flexible time domain unit is configured with a subband, and the subband corresponds to a second transmission direction; and performing the communication operation in the flexible time domain unit in accordance with the first transmission direction or in accordance with a relationship between the first transmission direction and the second transmission direction.

According to a second aspect of embodiments of the disclosure, a method for performing a communication operation is provided. The method is performed by a network device. The method includes: sending dynamic indication information to a terminal, in which the dynamic indication information is used by the terminal to determine a first transmission direction corresponding to a semi-static flexible time domain unit, the flexible time domain unit is configured with a subband, and the subband corresponds to a second transmission direction; and performing the communication operation in the flexible time domain unit in accordance with the first transmission direction or in accordance with a relationship between the first transmission direction and the second transmission direction.

According to a third aspect of embodiments of the disclosure, an apparatus for performing a communication operation is provided. The apparatus includes: a processing module configured to determine a first transmission direction corresponding to a semi-static flexible time domain unit based on dynamic indication information sent by a network device, in which the flexible time domain unit is configured with a subband, and the subband corresponds to a second transmission direction; and a communicating module configured to perform the communication operation in the flexible time domain unit in accordance with the first transmission direction or in accordance with a relationship between the first transmission direction and the second transmission direction.

According to a fourth aspect of embodiments of the disclosure, an apparatus for performing a communication operation is provided. The apparatus includes: a sending module configured to send dynamic indication information to a terminal, in which the dynamic indication information is used by the terminal to determine a first transmission direction corresponding to a semi-static flexible time domain unit, the flexible time domain unit is configured with a subband, and the subband corresponds to a second transmission direction; and a processing module configured to perform the communication operation in the flexible time domain unit in accordance with the first transmission direction or in accordance with a relationship between the first transmission direction and the second transmission direction.

According to a fifth aspect of embodiments of the disclosure, a communication system is provided. The communication system includes a terminal and a network device. The terminal is configured to implement the method for performing a communication operation of any of the above embodiments, and the network device is configured to implement the method for performing a communication operation of any of the above embodiments.

According to a sixth aspect of embodiments of the disclosure, a communication device is provided. The communication device includes a processor and a memory for storing a computer program, in which when the computer program is executed by the processor, the method for performing a communication operation of any of the above embodiments is implemented.

According to a seventh aspect of embodiments of the disclosure, a communication device is provided. The communication device includes a processor and a memory for storing a computer program, in which when the computer program is executed by the processor, the method for performing a communication operation of any of the above embodiments is implemented.

According to an eighth aspect of embodiments of the disclosure, a computer-readable storage medium for storing a computer program is provided. When the computer program is executed by a processor, the method for processing a communication operation of any of the above embodiments is implemented.

According to a ninth aspect of embodiments of the disclosure, a computer-readable storage medium for storing a computer program is provided. When the computer program is executed by a processor, the method for performing a communication operation of any of the above embodiments is implemented.

According to the embodiments of the disclosure, in a case that the network device configures a subband for a terminal in a flexible time domain unit, the network device indicates the first transmission direction corresponding to the flexible time domain unit through the dynamic indication information, and the terminal may determine, in accordance with the first transmission direction, how to perform the communication operation in the flexible time domain unit, or the terminal may determine, in accordance with the relationship between the first transmission direction and the second transmission direction corresponding to the subband, how to perform the communication operation in the flexible time domain unit, such as how to transmit data. Accordingly, for the flexible time domain unit configured with the subband, when the indication information indicates the first transmission direction corresponding to the flexible time domain unit, the terminal may determine how to transmit data in the flexible time domain unit, which is conducive to avoiding problems in the communication operation performed by the terminal.

### BRIEF DESCRIPTION OF THE DRAWINGS

In order to more clearly illustrate the technical solutions in the embodiments of the disclosure, the drawings required for use in the description of the embodiments will be briefly introduced below. Obviously, the drawings described below are only some embodiments of the disclosure. For ordinary technicians in this field, other drawings can be obtained based on these drawings without paying creative labor.
FIG. 1A is a schematic flowchart illustrating a method for performing a communication operation according to an embodiment of the disclosure.
FIG. 1B is a schematic diagram illustrating a slot format according to an embodiment of the disclosure.
FIG. 1C is a schematic diagram illustrating an uplink subband according to an embodiment of the disclosure.
FIG. 2A is a schematic flowchart illustrating another method for performing a communication operation according to an embodiment of the disclosure.
FIG. 2B is a schematic diagram illustrating data transmission in a flexible time domain unit according to an embodiment of the disclosure.
FIG. 3A is a schematic flowchart illustrating another method for performing a communication operation according to an embodiment of the disclosure.
FIG. 3B is a schematic diagram illustrating data transmission in a flexible time domain unit according to an embodiment of the disclosure.
FIG. 4A is a schematic flowchart illustrating another method for performing a communication operation according to an embodiment of the disclosure.
FIG. 4B is a schematic diagram illustrating data transmission in a flexible time domain unit according to an embodiment of the disclosure.
FIG. 5A is a schematic flowchart illustrating another method for performing a communication operation according to an embodiment of the disclosure.
FIG. 5B is a schematic diagram illustrating data transmission in a flexible time domain unit according to an embodiment of the disclosure.
FIG. 6A is a schematic flowchart illustrating another method for performing a communication operation according to an embodiment of the disclosure.
FIG. 6B is a schematic diagram illustrating data transmission in a flexible time domain unit according to an embodiment of the disclosure.
FIG. 7A is a schematic flowchart illustrating another method for performing a communication operation according to an embodiment of the disclosure.
FIG. 7B is a schematic diagram illustrating data transmission in a flexible time domain unit according to an embodiment of the disclosure.
FIG. 8 is a schematic flowchart illustrating a method for performing a communication operation according to an embodiment of the disclosure.
FIG. 9 is a schematic flowchart illustrating another method for performing a communication operation according to an embodiment of the disclosure.
FIG. 10 is a schematic flowchart illustrating yet another method for performing a communication operation according to an embodiment of the disclosure.
FIG. 11 is a schematic flowchart illustrating yet another method for performing a communication operation according to an embodiment of the disclosure.
FIG. 12 is a schematic flowchart illustrating yet another method for performing a communication operation according to an embodiment of the disclosure.
FIG. 13 is a schematic flowchart illustrating yet another method for performing a communication operation according to an embodiment of the disclosure.
FIG. 14 is a schematic flowchart illustrating yet another method for performing a communication operation according to an embodiment of the disclosure.
FIG. 15 is a schematic diagram illustrating the interaction between a terminal and a network device according to an embodiment of the disclosure.
FIG. 16 is a schematic block diagram illustrating an apparatus for performing a communication operation according to an embodiment of the disclosure.
FIG. 17 is a schematic block diagram illustrating an apparatus for performing a communication operation according to an embodiment of the disclosure.
FIG. 18 is a schematic block diagram illustrating an apparatus for performing a communication operation according to an embodiment of the disclosure.
FIG. 19 is a schematic block diagram illustrating an apparatus for performing a communication operation according to an embodiment of the disclosure.

### DETAILED DESCRIPTION

The following will be combined with the drawings in the embodiments of the disclosure to clearly and completely describe the technical solutions in the embodiments of the disclosure. Obviously, the described embodiments are only part of the embodiments of the disclosure, not all of the embodiments. Based on the embodiments in the disclosure, all other embodiments obtained by the skilled in the art without making creative work are within the scope of protection of the disclosure.

The terms used in the embodiments of the disclosure are only for the purpose of describing specific embodiments and are not intended to limit the embodiments of the disclosure. The singular forms of "a" and "the" used in the embodiments of the disclosure and the appended claims are also intended to include plural forms unless the context clearly indicates other meanings. It should also be understood that the term "and/or" used herein refers to and includes any or all possible combinations of one or more associated listed items.

It should be understood that although the terms "first," "second," "third," etc. may be used to describe various information in the embodiments of the disclosure, these information should not be limited to these terms. These terms are only used to distinguish the same type of information from each other. For example, without departing from the scope of the embodiments of the disclosure, the "first information" may also be referred to as the "second information", and similarly, the "second information" may also be referred to as the "first information". Depending on the context, the word "if" as used herein may be interpreted as "at the time of" or "when" or "in response to determining".

For the purpose of brevity and ease of understanding, the terms used herein to characterize size relationships are "greater than," "less than," "higher than," or "lower than". However, those skilled in the art could understand that the term "greater than" also covers the meaning of "greater than or equal to", the term "less than" also covers the meaning of "less than or equal to", the term "higher than" covers the meaning of "higher than or equal to", and the term "lower than" also covers the meaning of "lower than or equal to".

In an embodiment, the network device may configure a respective type for each time domain unit in the time domain resource for the terminal.

In an embodiment, the time domain unit includes at least one of: a frame, a subframe, a slot, or a symbol. The symbol may be an Orthogonal Frequency Division Multiplexing (OFDM) symbol.

In an embodiment, the type of the time domain unit includes at least one of: a semi-static downlink time domain unit; a semi-static uplink time domain unit; or a semi-static flexible time domain unit.

The first transmission direction corresponding to the semi-static downlink time domain unit is uplink, the first transmission direction corresponding to the semi-static uplink time domain unit is downlink, and the first transmission direction corresponding to the semi-static flexible time domain unit is flexible. It should be noted that uplink and downlink are opposite transmission directions, and flexible is not an opposite transmission direction relative to uplink or downlink.

In an embodiment, the network device may carry the first configuration information through system information to configure the respective type for each time domain unit in the time domain resource for the terminal. The first configuration information includes a time division duplex uplink and downlink common configuration (tdd-UL-DL-ConfigurationCommon), where tdd stands for time division duplex.

In an embodiment, the network device may configure the respective type for each time domain unit in the time domain resource for the terminal through the first configuration information carried in the system information and second configuration information carried in radio resource control (RRC) signaling. The first configuration information includes tdd-UL-DL-ConfigurationCommon, and the second configuration information includes time division duplex uplink and downlink dedicated configuration (tdd-UL-DL-ConfigurationDedicated).

For example, in the semi-static downlink time domain unit, the terminal is only able to perform downlink communication.

For example, in the semi-static uplink time domain unit, the terminal is only able to perform uplink communication.

For example, for the semi-static flexible time domain unit, the terminal may determine, based on dynamic indication information or semi-static configuration signaling, whether the first transmission direction corresponding to the semi-static flexible time domain unit is uplink or downlink.

In a case that it is determined that the first transmission direction corresponding to the semi-static flexible time domain unit is uplink, the uplink communication may be performed in the semi-static flexible time domain unit. In a case that it is determined that the first transmission direction corresponding to the semi-static flexible time domain unit is downlink, downlink communication may be performed in the semi-static flexible time domain unit.

In an embodiment, the network device may configure a downlink subband for the terminal in the semi-static uplink time domain unit. In the case that the network device is able to perform full-duplex communication and the terminal is able to perform half-duplex communication, the terminal may perform downlink communication in the downlink subband or perform uplink communication with frequency domain resource(s) outside the downlink subband in the semi-static uplink time domain unit. In the case that both the network device and the terminal are able to perform full-duplex communication, the terminal may perform downlink communication in the downlink subband and perform uplink communication with frequency domain resource(s) outside the downlink subband in the semi-static uplink time domain unit.

In an embodiment, the network device may configure an uplink subband for the terminal in a semi-static downlink time domain unit. In the case that the network device is able to perform full-duplex communication and the terminal is able to perform half-duplex communication, the terminal may perform uplink communication in the uplink subband or perform downlink communication with frequency domain resource(s) outside the uplink subband in the semi-static downlink time domain unit. In the case that both the network device and the terminal are able to perform full-duplex communication, the terminal may perform uplink communication in the uplink subband and perform downlink communication with frequency domain resource(s) outside the uplink subband in the semi-static downlink time domain unit.

In an embodiment, the network device may configure a subband for the terminal in the semi-static flexible time domain unit, such as an uplink subband or a downlink subband. The second transmission direction corresponding to the uplink subband is uplink, and the second transmission direction corresponding to the downlink subband is downlink. For the semi-static flexible time domain unit, the terminal also needs to determine the first transmission direction corresponding to the semi-static flexible time domain unit based on the dynamic indication information sent by the network device.

For this case, there is currently no provision for how the terminal transmits data in the semi-static flexible time domain unit. Since there is a conflict since the first transmission direction is different from the second transmission direction, problems may occur in the communication operation performed by the terminal.

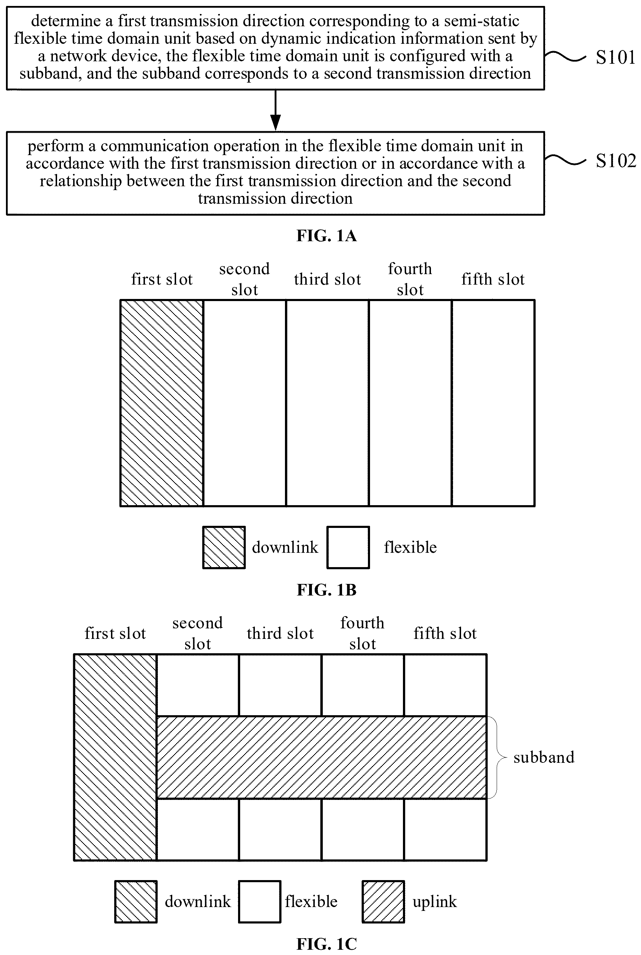

FIG. 1A is a schematic flowchart illustrating a method for performing a communication operation according to an embodiment of the disclosure. The method for performing a communication operation illustrated in the embodiments related to FIG. 1A may be performed by a terminal. The terminal includes, but is not limited to, a mobile phone, a tablet computer, a wearable device, a sensor, an Internet of Things device, or other communication devices. The terminal may communicate with a network device. The network device includes, but is not limited to, a network device in a fourth generation (4G), fifth generation (5G), sixth generation (6G) or other communication system, such as a base station, a core network, etc.

As illustrated in FIG. 1A, the method may include the following.

At step S101, a first transmission direction corresponding to a semi-static flexible time domain unit is determined based on dynamic indication information sent by a network device. The flexible time domain unit is configured with a subband, and the subband corresponds to a second transmission direction.

At step S102, a communication operation is performed in the flexible time domain unit in accordance with the first transmission direction or in accordance with a relationship between the first transmission direction and the second transmission direction.

In an embodiment, for the semi-static flexible time domain unit, the network device may indicate the first transmission direction corresponding to the semi-static flexible time domain unit by sending the dynamic indication information to the terminal. The terminal may determine the first transmission direction corresponding to the semi-static flexible time domain unit based on the indication information sent by the network device.

In an embodiment, the first transmission direction includes at least one of: uplink, downlink or flexible.

In an embodiment, the dynamic indication information includes: a Slot Format Indicator (SFI).

In an embodiment, the semi-static flexible time domain unit includes: a semi-static flexible symbol.

In an embodiment, the network device may configure a subband for the terminal in the semi-static flexible time domain unit. For example, in the case that the subband is an uplink (UL) subband (referred to as UL subband), the corresponding second transmission direction is uplink. Or in the case that the subband is a downlink (UL) subband (referred to as DL subband), the corresponding second transmission direction is downlink.

According to the embodiments of the disclosure, in the case that the network device configures the subband for the terminal in the flexible time domain unit, the network device indicates the first transmission direction corresponding to the flexible time domain unit through the dynamic indication information and the terminal may determine, in accordance with the first transmission direction, how to perform the communication operation in the flexible time domain unit or the terminal may determine, in accordance with the relationship between the first transmission direction and the second transmission direction corresponding to the subband, how to perform the communication operation in the flexible time domain unit, such as how to transmit (send and/or receive) data. Accordingly, for the flexible time domain unit configured with the subband, in the case that the indication information indicates the first transmission direction corresponding to the flexible time domain unit, the terminal may determine how to transmit data in the flexible time domain unit, which is conducive to avoiding problems in the communication operation performed by the terminal.

FIG. 1B is a schematic diagram illustrating a slot format according to an embodiment of the disclosure.

As illustrated in FIG. 1B, taking 5 slots as an example, for these 5 slots, the slot structure configured by the network device is DFFFF, where D indicates that the slot is a semi-static downlink slot, and F indicates that the slot is a semi-static flexible slot. That is, in the 5 slots, the first slot is a semi-static downlink slot, and the second to fifth slots are all semi-static flexible slots. The network device may indicate the first transmission direction corresponding to the semi-static flexible slot based on service requirements. The first transmission direction may also be called a dynamic transmission direction.

FIG. 1C is a schematic diagram illustrating an uplink subband according to an embodiment of the disclosure.

The network device may configure a subband for the terminal in a slot, and the subband may be an uplink subband or a downlink subband. As illustrated in FIG. 1C, the network device configures an uplink subband (UL subband) for the terminal in each of the second to fifth slots. It should be understood that the network device may also configure a downlink subband for the terminal in a time domain unit, but this embodiment is mainly described by taking a case that the network device configures a downlink subband for the terminal in the time domain unit as an example.

It should be noted that performing the communication operation in the flexible time domain unit in accordance with the first transmission direction or in accordance with the relationship between the first transmission direction and the second transmission direction includes two cases.

One case is to perform the communication operation in the flexible time domain unit in accordance with the relationship between the first transmission direction and the second transmission direction. Another case is to perform the communication operation in the flexible time domain unit in accordance with the first transmission direction. The terminal may select one of the two cases to perform.

Several embodiments below will describe how to perform the communication operation in the flexible time domain unit in accordance with the relationship between the first transmission direction and the second transmission direction.

The relationship between the first transmission direction and the second transmission direction includes: the first transmission direction being the same as the second transmission direction; or the first transmission direction being opposite to the second transmission direction.

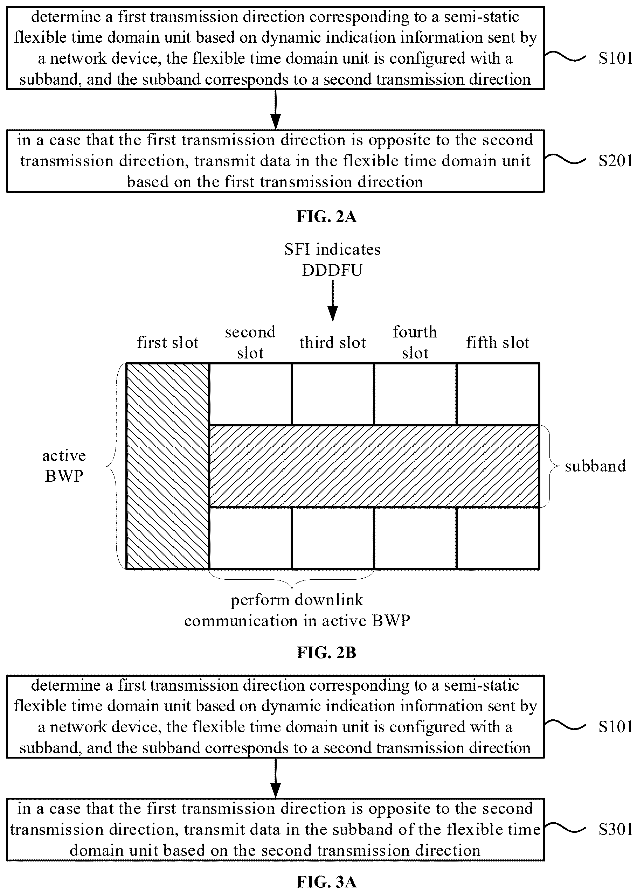

FIG. 2A is a schematic flowchart illustrating another method for performing a communication operation according to an embodiment of the disclosure. The method may be performed by a terminal. As illustrated in FIG. 2A, performing the communication operation in the flexible time domain unit in accordance with the relationship between the first transmission direction and the second transmission direction includes the following.

At step S201, in the case that the first transmission direction is opposite to the second transmission direction, data is transmitted in the flexible time domain unit based on the first transmission direction.

It should be noted that the embodiment illustrated in FIG. 2A may be implemented independently or in combination with at least one other embodiments in the disclosure, which may be selected as needed and the disclosure is not limited thereto.

In an embodiment, the first transmission direction may be the same as or opposite to the second transmission direction. The first transmission direction being opposite to the second transmission direction includes the first transmission direction being uplink and the second transmission direction being downlink; or the first transmission direction being downlink and the second transmission direction being uplink.

In the case that the first transmission direction is opposite to the second transmission direction, the terminal may transmit data in the flexible time domain unit based on the first transmission direction. For example, in the case that the first transmission direction is uplink and the second transmission direction is downlink, the terminal may perform uplink communication in the flexible time domain unit. For example, the terminal may perform the uplink communication with the frequency domain resource(s) corresponding to the flexible time domain unit. In the case that the first transmission direction is downlink and the second transmission direction is uplink, the terminal may perform downlink communication in the flexible time domain unit. For example, the terminal may perform the downlink communication with the frequency domain resource(s) corresponding to the flexible time domain unit. It may be understood that the terminal ignores the subband.

The frequency domain resource includes, but is not limited to, a frequency band or an active bandwidth part (BWP).

FIG. 2B is a schematic diagram illustrating data transmission in a flexible time domain unit according to an embodiment of the disclosure.

As illustrated in FIG. 2B, based on FIG. 1C, the network device may send an SFI to the terminal and indicate respective first transmission directions corresponding to the second to fifth semi-static flexible slots through the SFI. For example, the SFI indicates DDDFU, where D indicates that the slot is a dynamic downlink slot, F indicates that the slot is a dynamic flexible slot, and U indicates that the slot is a dynamic uplink slot. It may be determined that the first transmission directions corresponding to the second and third semi-static flexible slots indicated by the SFI are both downlink, the first transmission direction corresponding to the fourth semi-static flexible slot is flexible, and the first transmission direction corresponding to the fifth semi-static flexible slot is uplink.

Since the second transmission direction corresponding to the uplink subband is uplink, the first transmission direction is different from the second transmission direction for each of the second and third semi-static flexible slots. The terminal may transmit data in the second and third semi-static flexible slots based on the first transmission direction. For example, the terminal may perform downlink communication in the active BWP corresponding to the second and third semi-static flexible slots, while each active BWP possibly includes an uplink subband. That is, the downlink communication is also possibly performed with the frequency domain resources corresponding to the uplink subband. It may be understood that the terminal ignores the uplink subband.

FIG. 3A is a schematic flowchart illustrating another method for performing a communication operation according to an embodiment of the disclosure. The method may be performed by a terminal. As illustrated in FIG. 3A, performing the communication operation in the flexible time domain unit in accordance with the relationship between the first transmission direction and the second transmission direction includes the following.

At step S301, in the case that the first transmission direction is opposite to the second transmission direction, data is transmitted in the subband of the flexible time domain unit based on the second transmission direction.

It should be noted that the embodiment illustrated in FIG. 3A may be implemented independently or in combination with at least one other embodiment in the disclosure, which may be selected as needed and the disclosure is not limited thereto.

In an embodiment, the first transmission direction may be the same as or opposite to the second transmission direction. The first transmission direction being opposite to the second transmission direction includes the first transmission direction being uplink and the second transmission direction being downlink; or the first transmission direction being downlink and the second transmission direction being uplink.

In the case that the first transmission direction is opposite to the second transmission direction, the terminal may transmit data in the subband of the flexible time domain unit based on the second transmission direction, and further the terminal may not transmit data outside the subband of the flexible time domain unit. For example, in the case that the first transmission direction is uplink and the second transmission direction is downlink, the terminal may perform downlink communication in the subband of the flexible time domain unit. In the case that the first transmission direction is downlink and the second transmission direction is uplink, the terminal may perform uplink communication in the subband of the flexible time domain unit.

The frequency domain resource includes, but is not limited to, a frequency band or an active BWP.

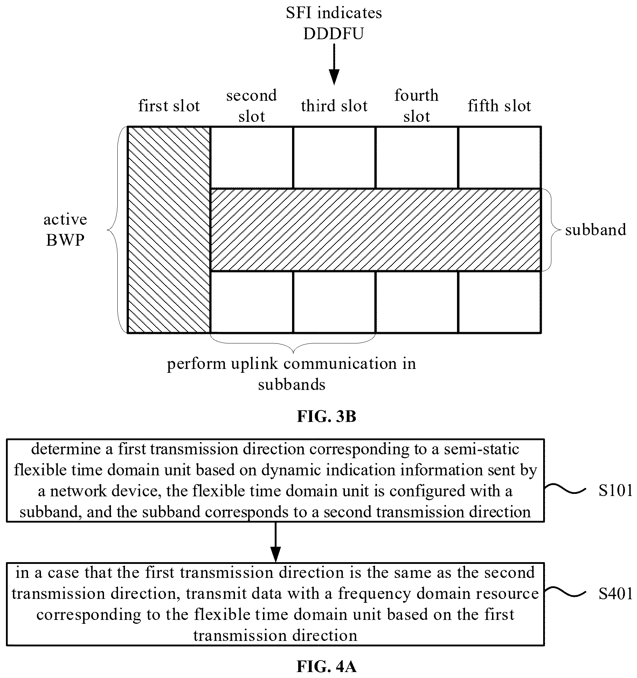

FIG. 3B is a schematic diagram illustrating data transmission in a flexible time domain unit according to an embodiment of the disclosure.

As illustrated in FIG. 3B, based on FIG. 1C, the network device may send an SFI to the terminal and indicate respective first transmission directions corresponding to the second to fifth semi-static flexible slots through the SFI. For example, the SFI indicates DDDFU, where D indicates that the slot is a dynamic downlink slot, F indicates that the slot is a dynamic flexible slot, and U indicates that the slot is a dynamic uplink slot. It may be determined that the first transmission directions corresponding to the second and third semi-static flexible slots indicated by the SFI are both downlink, the first transmission direction corresponding to the fourth semi-static flexible slot indicated by the SFI is flexible, and the first transmission direction corresponding to the fifth semi-static flexible slot indicated by the SFI is uplink.

Since the second transmission direction corresponding to the uplink subband is uplink, the first transmission direction is different from the second transmission direction for both the second and third semi-static flexible slots. The terminal may perform uplink communication in the subbands of the second and third semi-static flexible slots based on the second transmission direction.

In an embodiment, performing the communication operation in the flexible time domain unit in accordance with the relationship between the first transmission direction and the second transmission direction includes: determining, based on first indication information sent by a network device, to transmit the data in the flexible time domain unit based on the first transmission direction or to transmit data in the subband of the flexible time domain unit based on the second transmission direction, in the case that the first transmission direction is opposite to the second transmission direction.

In the case where the first transmission direction is opposite to the second transmission direction, the terminal determines, based on the first indication information sent by the network device, whether to transmit the data in the flexible time domain unit based on the first transmission direction in accordance with the embodiment illustrated in FIG. 2A, or to transmit the data in the subband of the flexible time domain unit based on the second transmission direction in accordance with the embodiment illustrated in FIG. 3A.

The first indication information is used for indicating that the terminal transmits data in the flexible time domain unit based on the first transmission direction or transmits data in the subband of the flexible time domain unit based on the second transmission direction in the case that the first transmission direction is opposite to the second transmission direction.

If the first indication information indicates that the terminal transmits data in the flexible time domain unit based on the first transmission direction in the case that the first transmission direction is opposite to the second transmission direction, the terminal transmits the data in the flexible time domain unit based on the first transmission direction in the case that the first transmission direction is opposite to the second transmission direction.

If the first indication information indicates that the terminal transmits data in the subband of the flexible time domain unit based on the second transmission direction in the case that the first transmission direction is opposite to the second transmission direction, the terminal transmits the data in the subband of the flexible time domain unit based on the second transmission direction in the case that the first transmission direction is opposite to the second transmission direction.

The first indication information may be carried in at least one of: System Information (SI), System Information Block (SIB), RRC signaling, or Media Access Control (MAC) layer signaling. The MAC layer signaling includes MAC Control Element (CE).

It should be noted that the terminal may also determine, based on a protocol agreement, whether to transmit data in the flexible time domain unit based on the first transmission direction or to transmit data in the subband of the flexible time domain unit based on the second transmission direction in the case that the first transmission direction is opposite to the second transmission direction.

FIG. 4A is a schematic flowchart illustrating another method for performing a communication operation according to an embodiment of the disclosure. The method may be performed by a terminal. As illustrated in FIG. 4A, performing the communication operation in the flexible time domain unit in accordance with the relationship between the first transmission direction and the second transmission direction includes the following.

At step S401, in the case that the first transmission direction is the same as the second transmission direction, data is transmitted with frequency domain resource(s) corresponding to the flexible time domain unit based on the first transmission direction.

It should be noted that the embodiment illustrated in FIG. 4A may be implemented independently or in combination with at least one other embodiment in the disclosure, which may be selected as required and the disclosure is not limited thereto.

In an embodiment, the first transmission direction may be the same as or opposite to the second transmission direction. The first transmission direction being opposite to the second transmission direction includes the first transmission direction being uplink and the second transmission direction being uplink; or the first transmission direction being downlink and the second transmission direction being downlink.

In the case that the first transmission direction is the same as the second transmission direction, the terminal may transmit data with the frequency domain resource(s) corresponding to the flexible time domain unit based on the first transmission direction. For example, in the case that the first transmission direction is uplink and the second transmission direction is uplink, the terminal may perform uplink communication in the flexible time domain unit. For example, the terminal may perform the uplink communication with the frequency domain resource(s) corresponding to the flexible time domain unit. In the case that the first transmission direction is downlink and the second transmission direction is downlink, the terminal may perform downlink communication in the flexible time domain unit. For example, the terminal may perform the downlink communication with the frequency domain resource(s) corresponding to the flexible time domain unit. The above may be understood as that the terminal ignores the subband.

The frequency domain resource includes, but is not limited to, a frequency band or an active BWP.

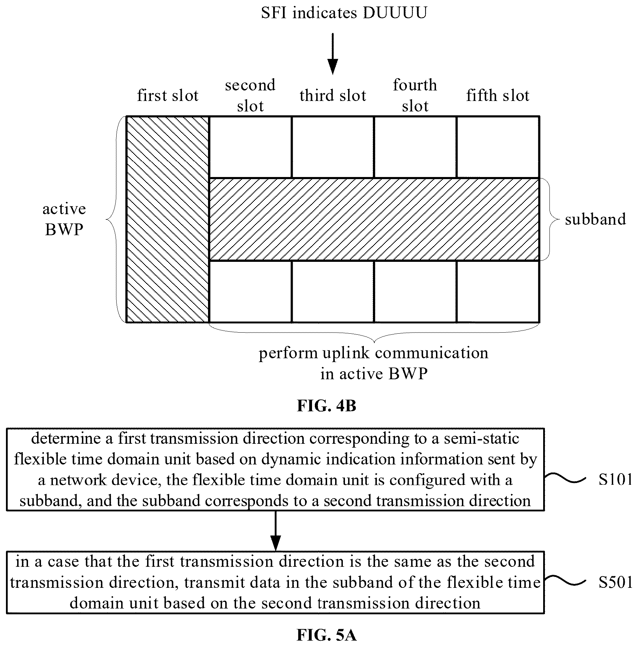

FIG. 4B is a schematic diagram illustrating data transmission in a flexible time domain unit according to an embodiment of the disclosure.

As illustrated in FIG. 4B, based on FIG. 1C, the network device may send an SFI to the terminal and indicate respective first transmission directions corresponding to the second to fifth semi-static flexible slots through the SFI. For example, the SFI indicates DUUUU, where D indicates that the slot is a dynamic downlink slot, and U indicates that the slot is a dynamic uplink slot. It may be determined that the first transmission directions corresponding to the second to fifth semi-static flexible slots indicated by the SFI are all uplink.

Since the second transmission direction corresponding to the uplink subband is uplink, the first transmission direction is the same as the second transmission direction for the second to fifth semi-static flexible slots. The terminal may transmit data on the second to fifth semi-static flexible slots based on the first transmission direction. For example, the uplink communication may be performed in the active BWP corresponding to the second to fifth semi-static flexible slots, while each active BWP possibly includes the uplink subband. That is, the uplink communication is possibly performed with the frequency domain resource(s) corresponding to the uplink subband. The above may be understood that the terminal ignores the uplink subband.

FIG. 5A is a schematic flowchart illustrating another method for performing a communication operation according to an embodiment of the disclosure. The terminal may be performed by a terminal. As illustrated in FIG. 5A, performing the communication operation in the flexible time domain unit in accordance with the relationship between the first transmission direction and the second transmission direction includes the following.

At step S501, in the case that the first transmission direction is the same as the second transmission direction, data is transmitted in the subband of the flexible time domain unit based on the second transmission direction.

It should be noted that the embodiment illustrated in FIG. 5A may be implemented independently or in combination with at least one other embodiment in the disclosure, which may be selected as needed and the disclosure is not limited thereto.

In an embodiment, the first transmission direction may be the same as or opposite to the second transmission direction. The first transmission direction being the same as the second transmission direction includes the first transmission direction being uplink and the second transmission direction being uplink; or the first transmission direction being downlink and the second transmission direction being downlink.

In the case that the first transmission direction is the same as the second transmission direction, the terminal may transmit data in the subband of the flexible time domain unit based on the second transmission direction and further may not transmit data outside the subband of the flexible time domain unit. For example, in the case that the first transmission direction is uplink and the second transmission direction is uplink, the terminal may perform uplink communication in the subband of the flexible time domain unit. In the case that the first transmission direction is downlink and the second transmission direction is downlink, the terminal may perform downlink communication in the subband of the flexible time domain unit.

The frequency domain resource includes, but is not limited to, a frequency band or an active BWP.

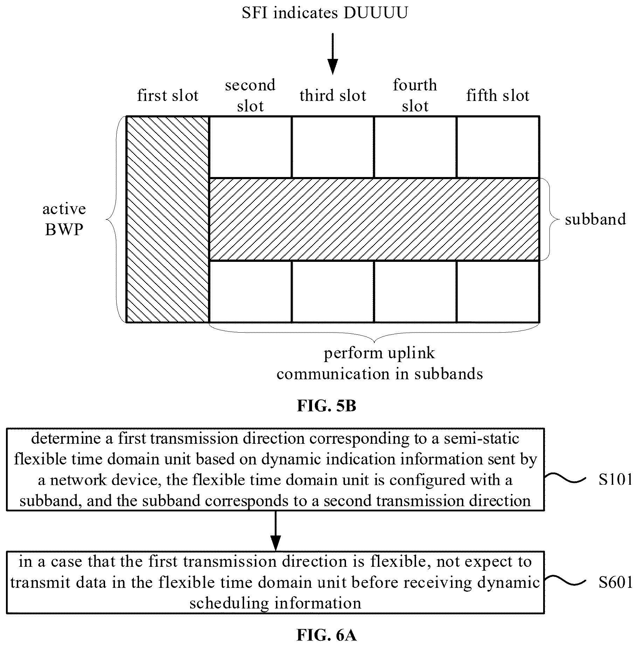

FIG. 5B is a schematic diagram illustrating data transmission in a flexible time domain unit according to an embodiment of the disclosure.

As illustrated in FIG. 5B, based on FIG. 1C, the network device may send an SFI to the terminal and indicate respective first transmission directions corresponding to the second to fifth semi-static flexible slots through the SFI. For example, the SFI indicates DUUUU, where D indicates that the slot is a dynamic downlink slot, and U indicates that the slot is a dynamic uplink slot. It may be determined that the first transmission directions corresponding to the second to fifth semi-static flexible slots indicated by the SFI are all uplink.

Since the second transmission direction corresponding to the uplink subband is uplink, the first transmission direction is the same as the second transmission direction for the second to fifth semi-static flexible slots. The terminal may perform uplink communication in the subbands of the second to fifth semi-static flexible slots based on the second transmission direction.

In an embodiment, performing the communication operation in the flexible time domain unit in accordance with the relationship between the first transmission direction and the second transmission direction includes: determining, based on second indication information sent by a network device, to transmit data with frequency domain resource(s) corresponding to the flexible time domain unit based on the first transmission direction or transmit data in the subband of the flexible time domain unit based on the first transmission direction in the case that the first transmission direction is the same as the second transmission direction.

In the case where the first transmission direction is the same as the second transmission direction, the terminal may determine, based on the second indication information sent by the network device, whether to transmit the data with the frequency domain resource(s) corresponding to the flexible time domain unit based on the first transmission direction in accordance with the embodiment illustrated in FIG. 4A, or to transmit the data in the subband of the flexible time domain unit based on the second transmission direction in accordance with the embodiment illustrated in FIG. 5A.

The second indication information is used for indicating that the terminal transmits the data with the frequency domain resource(s) corresponding to the flexible time domain unit based on the first transmission direction or transmits the data in the subband of the flexible time domain unit based on the first transmission direction, in the case that the first transmission direction is the same as the second transmission direction.

If the second indication information indicates that the terminal transmits the data with the frequency domain resource(s) corresponding to the flexible time domain unit based on the first transmission direction in the case that the first transmission direction is the same as the second transmission direction, the terminal transmits the data with the frequency domain resource(s) corresponding to the flexible time domain unit based on the first transmission direction in the case that the first transmission direction is opposite to the second transmission direction.

If the second indication information indicates that the terminal transmits data in the subband of the flexible time domain unit based on the second transmission direction in the case that the first transmission direction is the same as the second transmission direction, the terminal transmits data in the subband of the flexible time domain unit based on the second transmission direction in the case that the first transmission direction is opposite to the second transmission direction.

The second indication information may be carried in at least one of: SI, SIB, RRC signaling, or MAC layer signaling. The MAC layer signaling includes MAC CE.

It should be noted that the terminal may also determine, based on a protocol agreement, whether to transmit the data with the frequency domain resource(s) corresponding to the flexible time domain unit based on the first transmission direction, or to transmit the data in the subband of the flexible time domain unit based on the second transmission direction, in the case that the first transmission direction is the same as the second transmission direction.

Several embodiments below will describe how to perform the communication operation in the flexible time domain unit in accordance with the first transmission direction.

In an embodiment, in the case that the first transmission direction is uplink or downlink, there is still the same or opposite relationship between the first transmission direction and the second transmission direction, and the terminal may perform the communication operation in the flexible time domain unit in accordance with the relationship between the first transmission direction and the second transmission direction. In the case that the first transmission direction is flexible, there may be not the same or opposite relationship between the first transmission direction and the second transmission direction since the second transmission direction is uplink or downlink, and the terminal may ignore the relationship between the first transmission direction and the second transmission direction and perform the communication operation in the flexible time domain unit only in accordance with the first transmission direction.

FIG. 6A is a schematic flowchart illustrating another method for performing a communication operation according to an embodiment of the disclosure. The method may be performed by a terminal. As illustrated in FIG. 6A, performing the communication operation in the flexible time domain unit in accordance with the first transmission direction includes the following.

At step S601, in the case that the first transmission direction is flexible, it is not expected to transmit data in the flexible time domain unit before dynamic scheduling information is received.

It should be noted that the embodiment illustrated in FIG. 6A may be implemented independently or in combination with at least one other embodiment in the disclosure, which may be selected as needed and the disclosure is not limited thereto.

In an embodiment, in the case that the first transmission direction is flexible, the terminal does not determine whether to perform uplink communication or downlink communication in the flexible time domain unit before receiving the dynamic scheduling information for scheduling the semi-static flexible slot. Therefore, the terminal does not expect to transmit data in the flexible time domain unit before receiving the dynamic scheduling information. Correspondingly, the network device will not transmit data (such as receiving data sent by the terminal or sending data to the terminal) with the terminal in the flexible time domain unit, before sending the dynamic scheduling information for scheduling the semi-static flexible slot to the terminal.

The dynamic scheduling information includes Downlink Control Information (DCI). The DCI is used for scheduling communication resources of the semi-static flexible slot.

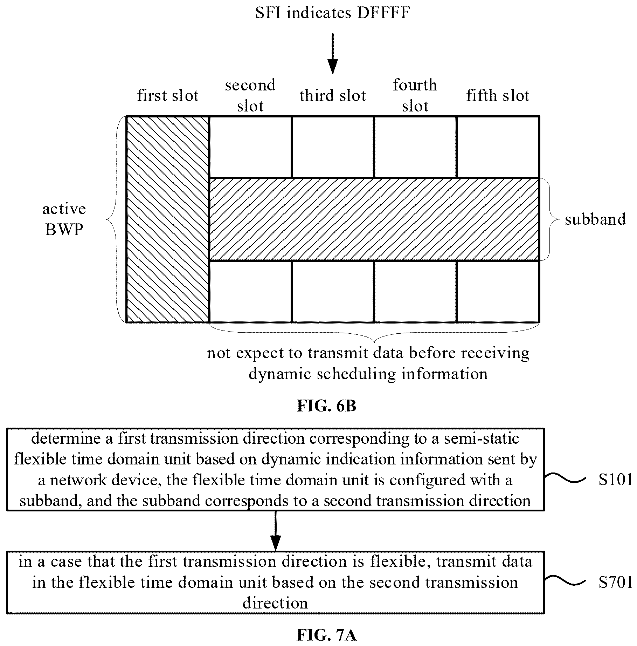

FIG. 6B is a schematic diagram illustrating data transmission in a flexible time domain unit according to an embodiment of the disclosure.

As illustrated in FIG. 6B, based on FIG. 1C, the network device may send an SFI to the terminal and indicate respective first transmission directions corresponding to the second to fifth semi-static flexible slots through the SFI. For example, the SFI indicates DFFFF, where D indicates that the slot is a dynamic downlink slot, and F indicates that the slot is a dynamic flexible slot. It may be determined that the first transmission directions corresponding to the second to fifth semi-static flexible slots indicated by the SFI are all flexible. For the second to fifth semi-static flexible slots, the terminal does not expect to transmit data in these flexible time domain units before receiving the dynamic scheduling information. Correspondingly, before the network device sends to the terminal the dynamic scheduling information for scheduling the second to fifth semi-static flexible slots, the network device will not transmit data (such as receiving data sent by the terminal or sending data to the terminal) with the terminal in the second to fifth semi-static flexible slots.

In an embodiment, performing the communication operation in flexible time domain unit in accordance with the first transmission direction also includes: determining, based on a scheduling of the dynamic scheduling information, to transmit the data based on a third transmission direction in a flexible slot, and transmitting the data in a subband of the flexible slot based on the second transmission direction in the case that the third transmission direction is the same as the second transmission direction.

In an embodiment, in the case that the first transmission direction is flexible, the terminal does not expect to transmit data in the flexible time domain unit before receiving the dynamic scheduling information. Upon receiving the dynamic scheduling information, the terminal may determine the direction based on which the dynamic scheduling information schedules the terminal to transmit data in the flexible slot.

For example, in the case that the dynamic scheduling information schedules the terminal to transmit data based on the third transmission direction in a flexible slot, the terminal may determine a relationship between the second transmission direction and the third transmission direction. In the case that the third transmission direction is the same as the second transmission direction, the terminal may transmit data in the subband of the flexible slot based on the second transmission direction, and further not transmit data outside the subband of the flexible time domain unit.

For example, in the case that the second transmission direction is downlink, the terminal may perform downlink communication in the subband of the flexible time domain unit. In the case that the second transmission direction is uplink, the terminal may perform uplink communication in the subband of the flexible time domain unit.

In an embodiment, performing the communication operation in the flexible time domain unit in accordance with the first transmission direction also includes: determining, based on a scheduling of the dynamic scheduling information, to transmit data based on a third transmission direction in the flexible slot, and transmitting the data with frequency domain resource(s) corresponding to the flexible slot based on the second transmission direction in the case that the third transmission direction is the same as the second transmission direction,.

In an embodiment, in the case that the first transmission direction is flexible, the terminal does not expect to transmit data in the flexible time domain unit before receiving the dynamic scheduling information. Upon receiving the dynamic scheduling information, the terminal may determine the direction based on which the dynamic scheduling information schedules the terminal to transmit data in the flexible slot.

For example, in the case that the dynamic scheduling information schedules the terminal to transmit data based on the third transmission direction in the flexible slot, the terminal may determine the relationship between the second transmission direction and the third transmission direction. In the case that the third transmission direction is the same as the second transmission direction, the terminal may transmit data with the frequency domain resource(s) corresponding to the flexible slot based on the second transmission direction. The frequency domain resource includes, but is not limited to, a frequency band or an active BWP.

For example, in the case that the second transmission direction is downlink, the terminal may perform downlink communication on the active BWP corresponding to the flexible time domain unit. In the case that the second transmission direction is uplink, the terminal may perform uplink communication on the active BWP corresponding to the flexible time domain unit.

In an embodiment, performing the communication operation in the flexible time domain unit in accordance with the first transmission direction also includes: determining, based on a scheduling of the dynamic scheduling information, to transmit data based on a third transmission direction in a flexible slot, and transmitting the data based on the third transmission direction in the flexible time domain unit in the case that the third transmission direction is opposite to the second transmission direction.

In an embodiment, in the case that the first transmission direction is flexible, the terminal does not expect to transmit data in the flexible time domain unit before receiving the dynamic scheduling information. Upon receiving the dynamic scheduling information, the terminal may determine the direction based on which the dynamic scheduling information schedules the terminal to transmit data in the flexible slot.

For example, in the case that the dynamic scheduling information schedules the terminal to transmit data based on the third transmission direction in the flexible slot, the terminal may determine the relationship between the second transmission direction and the third transmission direction. In the case that the third transmission direction is opposite to the second transmission direction, the terminal may transmit data with the frequency domain resource(s) corresponding to the flexible slot based on the third transmission direction. The frequency domain resource includes, but is not limited to, a frequency band or an active BWP.

For example, in the case that the second transmission direction is downlink and the third transmission direction is uplink, the terminal may perform uplink communication on the active BWP corresponding to the flexible time domain unit. In the case that the second transmission direction is uplink and the third transmission direction is downlink, the terminal may perform downlink communication on the active BWP corresponding to the flexible time domain unit.

In an embodiment, performing the communication operation in the flexible time domain unit in accordance with the first transmission direction also includes: determining, based on a scheduling of the dynamic scheduling information, to transmit data based on a third transmission direction in a flexible slot, and transmitting the data in a subband of the flexible time domain unit based on the second transmission direction in the case that the third transmission direction is opposite to the second transmission direction,.

In an embodiment, in the case that the first transmission direction is flexible, the terminal does not expect to transmit data in the flexible time domain unit before receiving the dynamic scheduling information. Upon receiving the dynamic scheduling information, the terminal may determine the direction based on which the dynamic scheduling information schedules the terminal to transmit data in the flexible slot.

For example, in the case that the dynamic scheduling information schedules the terminal to transmit data based on the third transmission direction in the flexible slot, the terminal may determine the relationship between the second transmission direction and the third transmission direction. In the case that the third transmission direction is opposite to the second transmission direction, the terminal may transmit data in the subband of the flexible slot based on the second transmission direction.

For example, in the case that the second transmission direction is downlink and the third transmission direction is uplink, the terminal may perform downlink communication in the subband of the flexible time domain unit. In the case that the second transmission direction is uplink and the third transmission direction is downlink, the terminal may perform uplink communication in the subband of the flexible time domain unit.

FIG. 7A is a schematic flowchart illustrating another method for performing a communication operation according to an embodiment of the disclosure. The method may be performed by a terminal. As illustrated in FIG. 7A, performing the communication operation in the flexible time domain unit in accordance with the first transmission direction includes the following.

At step S701, in the case that the first transmission direction is flexible, data is transmitted in the subband of the flexible time domain unit based on the second transmission direction.

It should be noted that the embodiment illustrated in FIG. 7A may be implemented independently or in combination with at least one other embodiment in the disclosure, which may be selected as needed and the disclosure is not limited thereto.

In an embodiment, in the case that the first transmission direction is flexible, before receiving the dynamic scheduling information for scheduling the semi-static flexible slot, it is not determined whether to perform uplink communication or downlink communication in the flexible time domain unit. However, the terminal is configured with the subband in the semi-static flexible slot. Therefore, data may be transmitted in the subband of the flexible time domain unit based on the second transmission direction corresponding to the subband. Further, data is not transmitted with the frequency domain resource(s) outside the subband of the flexible time domain unit.

The dynamic scheduling information includes DCI, and the DCI is used for scheduling communication resources of the semi-static flexible slot.

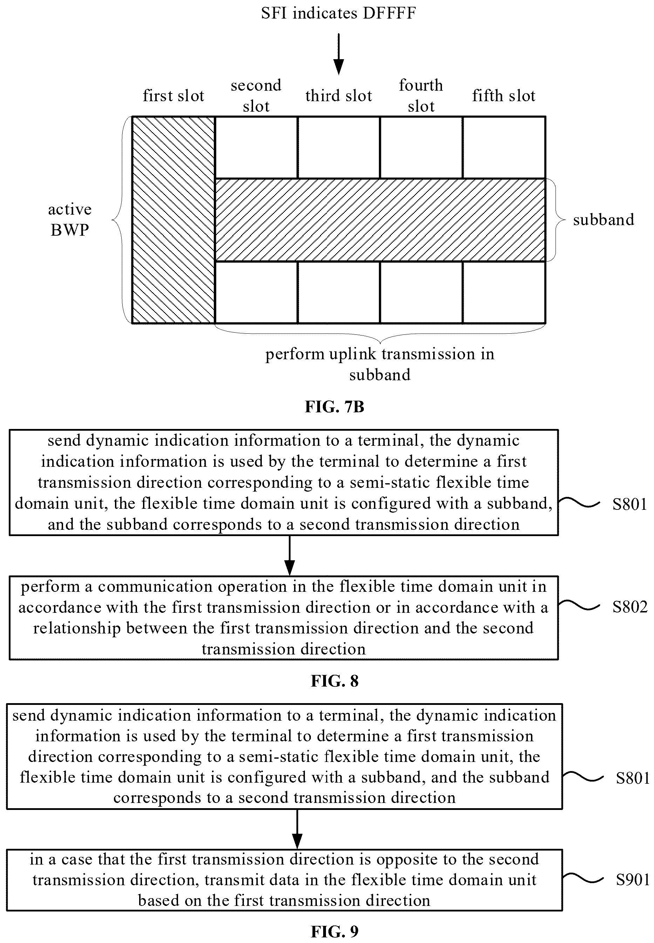

FIG. 7B is a schematic diagram illustrating data transmission in a flexible time domain unit according to an embodiment of the disclosure.

As illustrated in FIG. 7B, based on FIG. 1C, the network device may send an SFI to the terminal and indicate respective first transmission directions corresponding to the second to fifth semi-static flexible slots through the SFI. For example, the SFI indicates DFFFF, where D indicates that the slot is a dynamic downlink slot, and F indicates that the slot is a dynamic flexible slot. It may be determined that the first transmission directions corresponding to the second to fifth semi-static flexible slots indicated by the SFI are all flexible, and for the second to fifth semi-static flexible slots, the terminal may transmit data in the subbands of the flexible time domain units based on the second transmission direction corresponding to the subband. For example, the second direction is uplink, and the terminal may perform uplink communication in the subbands of the flexible time domain units.

In an embodiment, performing the communication operation in the flexible time domain unit in accordance with the first transmission direction includes: determining, based on third indication information sent by a network device, not to transmit data in the flexible time domain unit before receiving the dynamic scheduling information or to transmit data in the subband of the flexible time domain unit based on the second transmission direction, in the case that the first transmission direction is flexible.

In the case that the first transmission direction is flexible, the terminal may determine, based on the third indication information sent by the network device, whether not to expect to transmit data in the flexible time domain unit before receiving the dynamic scheduling information in accordance with the embodiment illustrated in FIG. 6A, or to transmit the data in the subband of the flexible time domain unit based on the second transmission direction in accordance with the embodiment illustrated in FIG. 7A.

The third indication information is used for indicating that the terminal does not expect to transmit data in the flexible time domain unit before receiving the dynamic scheduling information or the terminal transmits data in the subband of the flexible time domain unit based on the second transmission direction, in the case that the first transmission direction is flexible.

If the third indication information indicates that the terminal does not expect to transmit data in the flexible time domain unit before receiving dynamic scheduling information in the case that the first transmission direction is flexible, the terminal does not expect to transmit data in the flexible time domain unit before receiving dynamic scheduling information in the case that the first transmission direction is flexible.

If the third indication information indicates that the terminal transmits data in the subband of the flexible time domain unit based on the second transmission direction in the case that the first transmission direction is flexible, the terminal transmits the data in the subband of the flexible time domain unit based on the second transmission direction in the case that the first transmission direction is flexible.

The third indication information may be carried in at least one of: SI, SIB, RRC signaling, or MAC layer signaling. The MAC layer signaling includes MAC CE.

FIG. 8 is a schematic flowchart illustrating a method for performing a communication operation according to an embodiment of the disclosure. The method illustrated in embodiments related to FIG. 8 may be performed by a network device. The network device may communicate with a terminal. The network device includes, but is not limited to, base stations in communication systems, such as a 4G base station, a 5G base station, or a 6G base station. The terminal includes, but is not limited to, a mobile phone, a tablet computer, a wearable device, a sensor, an Internet of Things device, or other communication devices.

As illustrated in FIG. 8, the method may include the following.

At step S801, dynamic indication information is sent to a terminal, in which the dynamic indication information is used by the terminal to determine a first transmission direction corresponding to a semi-static flexible time domain unit, the flexible time domain unit is configured with a subband, and the subband corresponds to a second transmission direction.

At step S802, a communication operation is performed in the flexible time domain unit in accordance with the first transmission direction or in accordance with a relationship between the first transmission direction and the second transmission direction.

In an embodiment, for the semi-static flexible time domain unit, the network device may indicate the first transmission direction corresponding to the semi-static flexible time domain unit by sending the dynamic indication information to the terminal. The terminal may determine the first transmission direction corresponding to the semi-static flexible time domain unit based on the indication information sent by the network device.

In an embodiment, the first transmission direction includes at least one: uplink, downlink or flexible.

In an embodiment, the dynamic indication information includes: a Slot Format Indicator (SFI).

In an embodiment, the semi-static flexible time domain unit includes: a semi-static flexible symbol.

In an embodiment, the network device may configure a subband for the terminal in the semi-static flexible time domain unit. For example, in the case that the subband is an uplink subband (referred to as UL subband), the corresponding second transmission direction is uplink. Or in the case that the subband is a downlink subband (referred to as DL subband), the corresponding second transmission direction is downlink.

According to the embodiments of the disclosure, in a case that the network device configures the subband for the terminal in the flexible time domain unit, the network device indicates the first transmission direction corresponding to the flexible time domain unit through the dynamic indication information, and the network device may determine how to perform the communication operation in the flexible time domain unit in accordance with the first transmission direction, or the network device may determine how to perform the communication operation in the flexible time domain unit based on t in accordance with he relationship between the first transmission direction and the second transmission direction corresponding to the subband, such as how to transmit (send and/or receive) data. Accordingly, for the flexible time domain unit configured with the subband, in the case that the indication information indicates the first transmission direction corresponding to the flexible time domain unit, the network device may determine how to transmit data in the flexible time domain unit, to facilitate subsequent corresponding operations, which is conducive to avoiding problems in the communication with the terminal.

As illustrated in FIG. 1B, taking 5 slots as an example, for these 5 slots, the slot structure configured by the network device is DFFFF, where D indicates that the slot is a semi-static downlink slot, and F indicates that the slot is a semi-static flexible slot. That is, in the 5 slots, the first slot is a semi-static downlink slot, and the second to fifth slots are all semi-static flexible slots. The network device may indicate the first transmission direction corresponding to the semi-static flexible slot based on service requirements. The first transmission direction may also be called a dynamic transmission direction.

The network device may configure a subband for the terminal in a slot, and the subband may be an uplink subband or a downlink subband. As illustrated in FIG. 1C, the network device configures an uplink subband for the terminal in each of the second to fifth slots. It should be understood that the network device may also configure a downlink subband for the terminal in a time domain unit, but this embodiment is mainly described by taking a case that the network device configures a downlink subband for the terminal in the time domain unit as an example.

It should be noted that performing the communication operation in the flexible time domain unit in accordance with the first transmission direction or in accordance with the relationship between the first transmission direction and the second transmission direction includes two cases.

One case is to perform the communication operation in the flexible time domain unit v the relationship between the first transmission direction and the second transmission direction. Another case is to perform the communication operation in the flexible time domain unit in accordance with the first transmission direction. The terminal may select one of the two cases to perform.

Several embodiments below will describe how to perform the communication operation in the flexible time domain unit in accordance with the relationship between the first transmission direction and the second transmission direction.

The relationship between the first transmission direction and the second transmission direction includes: the first transmission direction being the same as the second transmission direction; or the first transmission direction being opposite to the second transmission direction.

FIG. 9 is a schematic flowchart illustrating another method for performing a communication operation according to an embodiment of the disclosure. The method may be performed by a network device. As illustrated in FIG. 9, performing the communication operation in the flexible time domain unit in accordance with the relationship between the first transmission direction and the second transmission direction includes the following.

At step S901, in a case that the first transmission direction is opposite to the second transmission direction, data is transmitted in the flexible time domain unit based on the first transmission direction.

It should be noted that the embodiment illustrated in FIG. 9 may be implemented independently or in combination with at least one other embodiment in the disclosure, which may be selected as needed, and the disclosure is not limited thereto.

In an embodiment, the first transmission direction may be the same as or opposite to the second transmission direction. The first transmission direction being opposite to the second transmission direction includes the first transmission direction being uplink and the second transmission direction being downlink; or the first transmission direction being downlink and the second transmission direction being uplink.

The network device may transmit data in the flexible time domain unit based on the first transmission direction in the case that the first transmission direction is opposite to the second transmission direction. For example, in the case that the first transmission direction is uplink and the second transmission direction is downlink, the network device performs uplink communication in the flexible time domain unit. For example, the terminal may perform the uplink communication with the frequency domain resource(s) corresponding to the flexible time domain unit, and the network device may receive data sent by the terminal in the flexible time domain unit. In the case that the first transmission direction is downlink and the second transmission direction is uplink, the network device performs downlink communication in the flexible time domain unit. For example, the terminal may perform the downlink communication with the frequency domain resource(s) corresponding to the flexible time domain unit, and the network device may send data to the terminal in the flexible time domain unit.

The frequency domain resource includes, but is not limited to, a frequency band or an active BWP.

As illustrated in FIG. 2B, based on FIG. 1C, the network device may send an SFI to the terminal and indicate respective first transmission directions corresponding to the second to fifth semi-static flexible slots through the SFI. For example, the SFI indicates DDDFU, where D indicates that the slot is a dynamic downlink slot, F indicates that the slot is a dynamic flexible slot, and U indicates that the slot is a dynamic uplink slot. Thus, the SFI indicates that the first transmission directions corresponding to the second and third semi-static flexible slots are both downlink, the SFI indicates that the first transmission direction corresponding to the fourth semi-static flexible slot is flexible, and the SFI indicates that the first transmission direction corresponding to the fifth semi-static flexible slot is uplink.

Since the second transmission direction corresponding to the uplink subband is uplink, the first transmission direction is different from the second transmission direction for each of the second and third semi-static flexible slots. The network device transmits data in the second and third semi-static flexible slots based on the first transmission direction. For example, the network device may perform downlink communication in the active BWP corresponding to the second and third semi-static flexible slots, while each active BWP possibly includes an uplink subband. That is, the downlink communication is also possibly performed with the frequency domain resources corresponding to the uplink subband. For example, the network device may send data to the terminal in the second and third semi-static flexible slots.

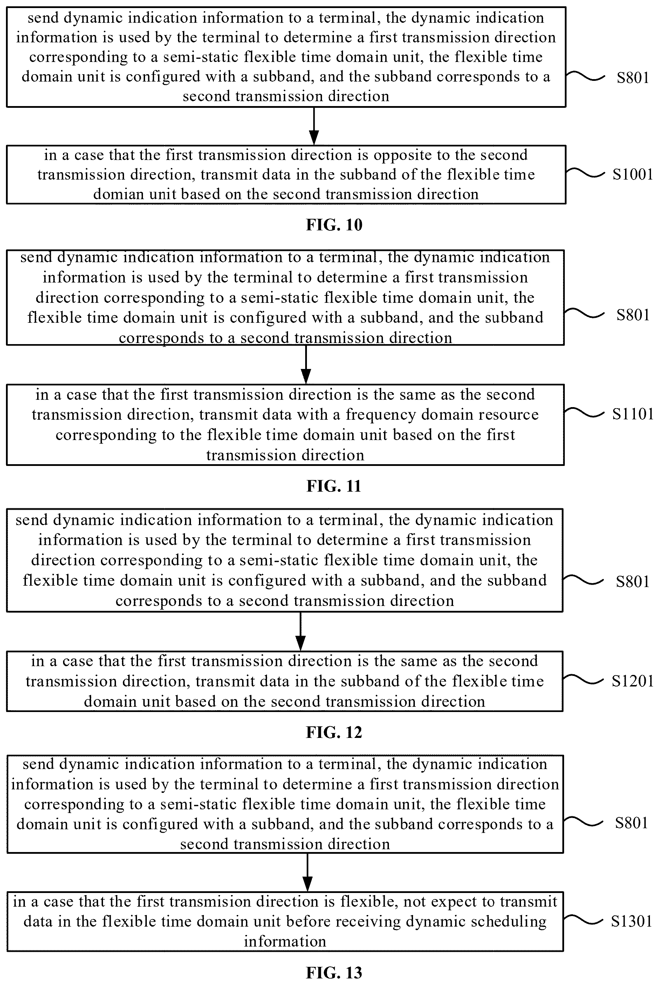

FIG. 10 is a schematic flowchart illustrating another method for performing a communication operation according to an embodiment of the disclosure. The method may be performed by a network device. As illustrated in FIG. 10, performing the communication operation in the flexible time domain unit in accordance with the relationship between the first transmission direction and the second transmission direction includes the following.

At step S1001, in a case that the first transmission direction is opposite to the second transmission direction, data is transmitted in the subband of the flexible time domain unit based on the second transmission direction.

It should be noted that the embodiment illustrated in FIG. 10 may be implemented independently or in combination with at least one other embodiment in the disclosure, which may be selected as needed and the disclosure is not limited thereto.

In an embodiment, the first transmission direction may be the same as or opposite to the second transmission direction. The first transmission direction being opposite to the second transmission direction includes the first transmission direction being uplink and the second transmission direction being downlink; or the first transmission direction being downlink and the second transmission direction being uplink.

In the case that the first transmission direction is opposite to the second transmission direction, the network device may transmit data in the subband of the flexible time domain unit based on the second transmission direction, and further the network device may not transmit data outside the subband of the flexible time domain unit. For example, in the case that the first transmission direction is uplink and the second transmission direction is downlink, the network device may perform downlink communication in the subband of the flexible time domain unit. For example, the network device may send data to the terminal in the subband of the flexible time domain unit. In the case that the first transmission direction is downlink and the second transmission direction is uplink, the network device may perform uplink communication in the subband of the flexible time domain unit. For example, the network device may receive data sent by the terminal in the subband of the flexible time domain unit.

The frequency domain resource includes, but is not limited to, a frequency band or an active BWP.

As illustrated in FIG. 3B, based on FIG. 1C, the network device may send an SFI to the terminal and indicate respective first transmission directions corresponding to the second to fifth semi-static flexible slots through the SFI. For example, the SFI indicates DDDFU, where D indicates that the slot is a dynamic downlink slot, F indicates that the slot is a dynamic flexible slot, and U indicates that the slot is a dynamic uplink slot. Thus, the SFI indicates that the first transmission directions corresponding to the second and third semi-static flexible slots are both downlink, the SFI indicates that the first transmission direction corresponding to the fourth semi-static flexible slot is flexible, and the SFI indicates that the first transmission direction corresponding to the fifth semi-static flexible slot is uplink.

Since the second transmission direction corresponding to the uplink subband is uplink, the first transmission direction is different from the second transmission direction for both the second and third semi-static flexible slots. The network device may perform uplink communication in the subbands of the second and third semi-static flexible slots based on the second transmission direction. For example, the network device may receive data sent by the terminal in the subbands of the second and third semi-static flexible slots.

In an embodiment, the method further includes: sending first indication information to the terminal, in which the first indication information indicates that the terminal transmits data in the flexible time domain unit based on the first transmission direction or transmits data in the subband of the flexible time domain unit based on the second transmission direction, in the case that the first transmission direction is opposite to the second transmission direction.

In a case that the first transmission direction is opposite to the second transmission direction, whether to transmit by the terminal data in the flexible time domain unit based on the first transmission direction or to transmit by the terminal data in the subband of the flexible time domain unit based on the second transmission direction may be indicated by the first indication information sent by the network device.

If the first indication information indicates that the terminal transmits data in the flexible time domain unit based on the first transmission direction in the case that the first transmission direction is opposite to the second transmission direction, the terminal transmits the data in the flexible time domain unit based on the first transmission direction in the case that the first transmission direction is opposite to the second transmission direction. Correspondingly, the network device transmits the data in the flexible time domain unit based on the first transmission direction in the case that the first transmission direction is opposite to the second transmission direction.

If the first indication information indicates that the terminal transmits data in the subband of the flexible time domain unit based on the second transmission direction in the case that the first transmission direction is opposite to the second transmission direction, the terminal transmits the data in the subband of the flexible time domain unit based on the second transmission direction in the case that the first transmission direction is opposite to the second transmission direction. Correspondingly, the network device transmits the data in the subband of the flexible time domain unit based on the second transmission direction in the case that the first transmission direction is opposite to the second transmission direction.

The first indication information may be carried in at least one of: SI, SIB, RRC signaling, or MAC layer signaling. The MAC layer signaling includes MAC CE.

It should be noted that the network device may also determine, based on a protocol agreement, whether to transmit data in the flexible time domain unit based on the first transmission direction or to transmit data in the subband of the flexible time domain unit based on the second transmission direction in the case that the first transmission direction is opposite to the second transmission direction.

FIG. 11 is a schematic flowchart illustrating another method for performing a communication operation according to an embodiment of the disclosure. The method may be performed by a network device. As illustrated in FIG. 11, performing the communication operation in the flexible time domain unit in accordance with the relationship between the first transmission direction and the second transmission direction includes the following.

At step S1101, in a case that the first transmission direction is the same as the second transmission direction, data is transmitted with the frequency domain resource(s) corresponding to the flexible time domain unit based on the first transmission direction.

It should be noted that the embodiment illustrated in FIG. 11 may be implemented independently or in combination with at least one other embodiment in the disclosure, which may be selected as needed and the disclosure is not limited thereto.

In an embodiment, the first transmission direction may be the same or opposite to the second transmission direction. The first transmission direction being opposite to the second transmission direction includes the first transmission direction being uplink and the second transmission direction being uplink; or the first transmission direction being downlink and the second transmission direction being downlink.

The network device may transmit the data with the frequency domain resource(s) corresponding to the flexible time domain unit based on the first transmission direction in the case that the first transmission direction is the same as the second transmission direction. For example, in the case that the first transmission direction is uplink and the second transmission direction is uplink, the network device may perform uplink communication in the flexible time domain unit. For example, the terminal may perform uplink communication with the frequency domain resource(s) corresponding to the flexible time domain unit, and the network device may receive data sent by the terminal with the frequency domain resource(s) corresponding to the flexible time domain unit. In the case that the first transmission direction is downlink and the second transmission direction is downlink, the network device may perform downlink communication in the flexible time domain unit. For example, the terminal may perform the downlink communication with the frequency domain resource(s) corresponding to the flexible time domain unit, and the network device may send data to the terminal with the frequency domain resource(s) corresponding to the flexible time domain unit.

The frequency domain resource includes, but is not limited to, a frequency band or an active BWP.

As illustrated in FIG. 4B, based on FIG. 1C, the network device may send an SFI to the terminal and indicate respective first transmission directions corresponding to the second to fifth semi-static flexible slots through the SFI. For example, the SFI indicates DUUUU, where D indicates that the slot is a dynamic downlink slot, and U indicates that the slot is a dynamic uplink slot. Thus, the SFI indicates that the first transmission directions corresponding to the second to fifth semi-static flexible slots are all uplink.

Since the second transmission direction corresponding to the uplink subband is uplink, the first transmission direction is the same as the second transmission direction for the second to fifth semi-static flexible slots. The network device transmits data in the second to fifth semi-static flexible slots based on the first transmission direction. For example, the uplink communication may be performed in the active BWP corresponding to the second to fifth semi-static flexible slots, while each active BWP possibly includes the uplink subband. That is, the uplink communication is possibly performed with the frequency domain resource(s) corresponding to the uplink subband, which may be understood as ignoring the uplink subband. For example, the network device may receive data sent by the terminal in the active BWP corresponding to the second to fifth semi-static flexible slots.

FIG. 12 is a schematic flowchart illustrating another method for performing a communication operation according to an embodiment of the disclosure. The method may be performed by a network device. As illustrated in FIG. 12, performing the communication operation in the flexible time domain unit in accordance with the relationship between the first transmission direction and the second transmission direction includes the following.

At step S1201, in a case that the first transmission direction is the same as the second transmission direction, data is transmitted in the subband of the flexible time domain unit based on the second transmission direction.

It should be noted that the embodiment illustrated in FIG. 12 may be implemented independently or in combination with at least one other embodiment in the disclosure, which may be selected as needed and the disclosure is not limited thereto.

In an embodiment, the first transmission direction may be the same as or opposite to the second transmission direction. The first transmission direction being the same as the second transmission direction includes the first transmission direction being uplink and the second transmission direction being uplink; or the first transmission direction being downlink and the second transmission direction being downlink.

In the case that the first transmission direction is the same as the second transmission direction, the network device may transmit data in the subband of the flexible time domain unit based on second transmission direction, and further the network device may not transmit data outside the subband of the flexible time domain unit. For example, in the case that the first transmission direction is uplink and the second transmission direction is uplink, the network device may perform uplink communication in the subband of the flexible time domain unit. For example, the network device may receive data sent by the terminal in the subband of the flexible time domain unit. In the case that the first transmission direction is downlink and the second transmission direction is downlink, the terminal may perform downlink communication in the subband of the flexible time domain unit. For example, the network device may send data to the terminal in the subband of the flexible time domain unit.

The frequency domain resource includes, but is not limited to, a frequency band or an active BWP.

As illustrated in FIG. 5B, based on FIG. 1C, the network device may send an SFI to the terminal and indicate respective first transmission directions corresponding to the second to fifth semi-static flexible slots through the SFI. For example, the SFI indicates DUUUU, where D indicates that the slot is a dynamic downlink slot, and U indicates that the slot is a dynamic uplink slot. Thus, the SFI indicates that the first transmission directions corresponding to the second to fifth semi-static flexible slots are all uplink.

Since the second transmission direction corresponding to the uplink subband is uplink, the first transmission direction is the same as the second transmission direction for the second to fifth semi-static flexible slots. The network device may perform uplink communication in the subbands of the second to fifth semi-static flexible slots based on the second transmission direction. For example, the network device may receive data sent by the terminal in the subbands of the second to fifth semi-static flexible slots.

In an embodiment, the method further includes: sending second indication information to the terminal, wherein the second indication information is used for indicating that the terminal transmits data with the frequency domain resource(s) corresponding to the flexible time domain unit based on the first transmission direction or transmits data in the subband of the flexible time domain unit based on the first transmission direction, in the case that the first transmission direction is the same as the second transmission direction,.

In the case that the first transmission direction is the same as the second transmission direction, whether the terminal transmits the data with the frequency domain resource(s) corresponding to the flexible time domain unit based on the first transmission direction or transmits the data in the subband of the flexible time domain unit based on the second transmission direction may be indicated by the second indication information sent by the network device.

If the second indication information indicates that the terminal transmits the data with the frequency domain resource(s) corresponding to the flexible time domain unit based on the first transmission direction in the case that the first transmission direction is the same as the second transmission direction, the terminal transmits the data with the frequency domain resource(s) corresponding to the flexible time domain unit based on the first transmission direction in the case that the first transmission direction is opposite to the second transmission direction. Correspondingly, the network device transmits the data with the frequency domain resource(s) corresponding to the flexible time domain unit based on the first transmission direction in the case that the first transmission direction is opposite to the second transmission direction.

If the second indication information indicates that the terminal transmits the data in the subband of the flexible time domain unit based on the second transmission direction in the case that the first transmission direction is the same as the second transmission direction, the terminal transmits the data in the subband of the flexible time domain unit based on the second transmission direction in the case that the first transmission direction is opposite to the second transmission direction. Correspondingly, the network device transmits the data in the subband of the flexible time domain unit based on the second transmission direction in the case that the first transmission direction is opposite to the second transmission direction.

The second indication information may be carried in at least one of: SI, SIB, RRC signaling, or MAC layer signaling. The MAC layer signaling includes MAC CE.

It should be noted that the network device may also determine, based on a protocol agreement, to transmit the data with the frequency domain resource(s) corresponding to the flexible time domain unit based on the first transmission direction or to transmit the data in the subband of the flexible time domain unit based on the second transmission direction, in the case that the first transmission direction is the same as the second transmission direction.

Several embodiments below will describe how to perform the communication operation in the flexible time domain unit in accordance with the first transmission direction.

In an embodiment, in the case that the first transmission direction is uplink or downlink, there is still the same or opposite relationship between the first transmission direction and the second transmission direction, and the network device may perform the communication operation in the flexible time domain unit in accordance with the relationship between the first transmission direction and the second transmission direction. In the case that the first transmission direction is flexible, there may be not the same or opposite relationship between the first transmission direction and the second transmission direction since the second transmission direction is uplink or downlink, and the network device may perform the communication operation in the flexible time domain unit in accordance with the first transmission direction.

FIG13 is a schematic flowchart illustrating another method for performing a communication operation according to an embodiment of the disclosure. The method may be performed by a network device. As illustrated in FIG. 13, performing the communication operation in the flexible time domain unit in accordance with the first transmission direction includes the following.

At step S1301, in the case that the first transmission direction is flexible, data is not transmitted in the flexible time domain unit before dynamic scheduling information is sent to the terminal.

It should be noted that the embodiment illustrated in FIG. 13 may be implemented independently or in combination with at least one other embodiment in the disclosure, which may be selected as needed and the disclosure is not limited thereto.

In an embodiment, in the case that the first transmission direction is flexible, the terminal does not determine whether to perform uplink communication or downlink communication in the flexible time domain unit before receiving dynamic scheduling information for scheduling the semi-static flexible slot. Therefore, the network device does not transmit data (such as receiving data sent by the terminal or sending data to the terminal) with the terminal in the flexible time domain unit before sending the dynamic scheduling information to the terminal.

The dynamic scheduling information includes DCI, and DCI is used for scheduling communication resources of the semi-static flexible slot.

As illustrated in FIG. 6B, based on FIG. 1C, the network device may send an SFI to the terminal and indicate respective first transmission directions corresponding to the second to fifth semi-static flexible slots through the SFI. For example, the SFI indicates DFFFF, where D indicates that the slot is a dynamic downlink slot, and F indicates that the slot is a dynamic flexible slot. Thus, the SFI indicates that the first transmission directions corresponding to the second to fifth semi-static flexible slots are all flexible. Then the network device may determine that for the second to fifth semi-static flexible slots, the terminal does not expect to transmit data in these flexible time domain units before receiving dynamic scheduling information. Correspondingly, the network device will not transmit data (such as receiving data sent by the terminal and sending data to the terminal) with the terminal in the second to fifth semi-static flexible slots before sending the dynamic scheduling information for scheduling the second to fifth semi-static flexible slots to the terminal.

In an embodiment, performing the communication operation in the flexible time domain unit in accordance with the first transmission direction also includes: determining, based on a scheduling of the dynamic scheduling information, to transmit the data based on a third transmission direction in the flexible slot, and transmitting the data in the subband of the flexible slot based on the second transmission direction in the case that the third transmission direction is the same as the second transmission direction.

In an embodiment, in the case that the first transmission direction is flexible, the terminal does not expect to transmit data in the flexible time domain unit before receiving the dynamic scheduling information. However, the network device may send the dynamic scheduling information to the terminal, and the dynamic scheduling information may schedule the direction based on which the terminal transmits data in the flexible slot.

For example, in the case that the dynamic scheduling information schedules the terminal to transmit data based on the third transmission direction in the flexible slot, the network device may determine the relationship between the second transmission direction and the third transmission direction. In the case that the third transmission direction is the same as the second transmission direction, the network device transmits data in the subband of the flexible slot based on the second transmission direction and further not transmit data outside the subband of the flexible time domain unit.

For example, in the case that the second transmission direction is downlink, the network device performs downlink communication in the subband of the flexible time domain unit. For example, the network device sends data to the terminal in the subband of the flexible time domain unit. In the case that the second transmission direction is uplink, the network device performs uplink communication in the subband of the flexible time domain unit. For example, the network device receives data sent by the terminal in the subband of the flexible time domain unit.

In an embodiment, performing the communication operation in the flexible time domain unit in accordance with the first transmission direction further includes: determining, based on a scheduling of the dynamic scheduling information, to transmit data based on a third transmission direction in the flexible slot; and transmitting the data with the frequency domain resource(s) corresponding to the flexible slot based on the second transmission direction in the case that the third transmission direction is the same as the second transmission direction,.

In an embodiment, in the case that the first transmission direction is flexible, the terminal does not expect to transmit data in the flexible time domain unit before receiving the dynamic scheduling information. The network device may send the dynamic scheduling information to the terminal, and the dynamic scheduling information is used for scheduling the direction based on which the terminal transmits data in the flexible slot.

For example, in the case that the dynamic scheduling information schedules the terminal to transmit data based on the third transmission direction in the flexible slot, the network device may determine the relationship between the second transmission direction and the third transmission direction. In the case that the third transmission direction is the same as the second transmission direction, the network device may transmit data with the frequency domain resource(s) corresponding to the flexible slot based on the second transmission direction. The frequency domain resource includes, but is not limited to, a frequency band or an active BWP.

For example, in the case that the second transmission direction is downlink, the network device may perform downlink communication on the active BWP corresponding to the flexible time domain unit. For example, the network device may send data to the terminal on the active BWP corresponding to the flexible time domain unit. In the case that the second transmission direction is uplink, the terminal may perform uplink communication on the active BWP corresponding to the flexible time domain unit. For example, the network device may receive data sent by the terminal on the active BWP corresponding to the flexible time domain unit.

In an embodiment, performing the communication operation in the flexible time domain unit in accordance with the first transmission direction also includes: determining, based on a scheduling of the dynamic scheduling information, to transmit data based on a third transmission direction in a flexible slot; and transmitting the data in the flexible time domain unit based on the third transmission direction in the case that the third transmission direction is opposite to the second transmission direction.

In an embodiment, in the case that the first transmission direction is flexible, the terminal does not expect to transmit data in the flexible time domain unit before receiving the dynamic scheduling information. The network device may send dynamic scheduling information to the terminal, and the dynamic scheduling information is used for scheduling the direction based on which the terminal transmits data in the flexible slot.

For example, in the case that the dynamic scheduling information schedules the terminal to transmit data based on the third transmission direction in the flexible slot, the network device may determine the relationship between the second transmission direction and the third transmission direction. In the case that the third transmission direction is opposite to the second transmission direction, the network device may transmit data with the frequency domain resource(s) corresponding to the flexible slot based on the third transmission direction. The frequency domain resource includes, but is not limited to, a frequency band or an active BWP.

For example, in the case that the second transmission direction is downlink and the third transmission direction is uplink, the network device may perform uplink communication on the active BWP corresponding to the flexible time domain unit. For example, the network device receives data sent by the terminal on the active BWP corresponding to the flexible time domain unit. In the case that the second transmission direction is uplink and the third transmission direction is downlink, the network device may perform downlink communication on the active BWP corresponding to the flexible time domain unit. For example, the network device sends data to the terminal on the active BWP corresponding to the flexible time domain unit.

In an embodiment, performing the communication operation in the flexible time domain unit in accordance with the first transmission direction also includes: determining, based on a scheduling of the dynamic scheduling information, to transmit data based on a third transmission direction on a flexible slot, and transmitting the data in the subband of the flexible time domain unit based on the second transmission direction in the case that the third transmission direction is opposite to the second transmission direction.

In an embodiment, in the case that the first transmission direction is flexible, the terminal does not expect to transmit data in the flexible time domain unit before receiving the dynamic scheduling information. The network device may send the dynamic scheduling information to the terminal, and the dynamic scheduling information is used for scheduling the direction based on which the terminal transmits data in the flexible slot.

For example, in the case that the dynamic scheduling information schedules the terminal to transmit data based on the third transmission direction in the flexible e slot, the network device may determine the relationship between the second transmission direction and the third transmission direction. In the case that the third transmission direction is opposite to the second transmission direction, the network device may transmit data in the subband of the flexible slot based on the second transmission direction.

For example, in the case that the second transmission direction is downlink and the third transmission direction is uplink, the network device may perform downlink communication in the subband of the flexible time domain unit. For example, the network device may send data to the terminal in the subband of the flexible time domain unit. In the case that the second transmission direction is uplink and the third transmission direction is downlink, the network device may perform uplink communication in the subband of the flexible time domain unit. For example, the network device may receive data sent by the terminal in the subband of the flexible time domain unit.

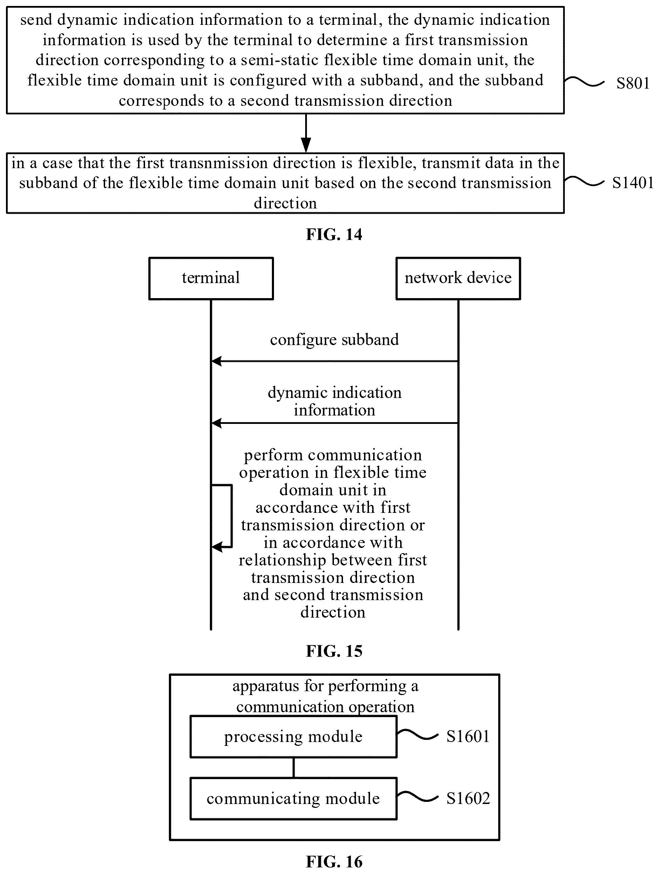

FIG. 14 is a schematic flowchart illustrating another method for performing a communication operation according to an embodiment of the disclosure. The method may be performed by a network device. As illustrated in FIG. 14, performing the communication operation in the flexible time domain unit in accordance with the first transmission direction includes the following.

At step S1401, in the case that the first transmission direction is flexible, data is transmitted in the subband of the flexible time domain unit based on the second transmission direction.

It should be noted that the embodiment illustrated in FIG. 14 may be implemented independently or in combination with at least one other embodiment in the disclosure, which may be selected as needed and the disclosure is not limited thereto.

In an embodiment, in the case that the first transmission direction is flexible, the terminal does not determine whether to perform uplink communication or downlink communication in the flexible time domain unit before receiving the dynamic scheduling information for scheduling the semi-static flexible slot. However, the network device configures a subband for the terminal in the semi-static flexible slot. Therefore, data may be transmitted in the subband of the flexible time domain unit based on the second transmission direction corresponding to the subband. Further, data is not transmitted with frequency domain resource(s) outside the subband of the flexible time domain unit.

The dynamic scheduling information includes DCI, and DCI is used for scheduling communication resources of the semi-static flexible slot.

As illustrated in FIG. 7B, based on FIG. 1C, the network device may send an SFI to the terminal and indicate respective first transmission directions corresponding to the second to fifth semi-static flexible slots through the SFI. For example, the SFI indicates DFFFF, where D indicates that the slot is a dynamic downlink slot, and F indicates that the slot is a dynamic flexible slot. Thus, the SFI indicates that the first transmission directions corresponding to the second to fifth semi-static flexible slots are all flexible, and the network device may determine that for the second to fifth semi-static flexible slots, the terminal transmits data in the subbands of the flexible time domain units based on the second transmission direction corresponding to the subband, where the second direction is uplink, and the terminal may perform uplink communication in the subbands of the flexible time domain units. The network device may receive data sent by the terminal in the subbands of the flexible time domain units.

In an embodiment, the method further includes: sending third indication information to the terminal, in which the third indication information indicates that the terminal does not transmit data in the flexible time domain unit before sending dynamic scheduling information to the terminal or transmits data in a subband of the flexible time domain unit based on the second transmission direction, in the case that the first transmission direction is flexible.

In the case that the first transmission direction is flexible, whether the terminal does not expect to transmit data in the flexible time domain unit before receiving the dynamic scheduling information or the terminal transmits data in the subband of the flexible time domain unit based on the second transmission direction may be indicated by the third indication information sent by the network device.

In the case that the third indication information indicates that the terminal does not transmit data in the flexible time domain unit before sending the dynamic scheduling information by the network device to the terminal in the case that the first transmission direction is flexible, and the terminal does not expect to transmit data in the flexible time domain unit before receiving the dynamic scheduling information in the case that the first transmission direction is flexible. Correspondingly, the network device does not transmit data to the terminal in the flexible time domain unit before sending the dynamic scheduling information to the terminal in the case that the first transmission direction is flexible.

If the third indication information indicates that the terminal transmits data in the subband of the flexible time domain unit based on the second transmission direction in the case that the first transmission direction is flexible, the terminal transmits the data in the subband of the flexible time domain unit based on the second transmission direction in the case that the first transmission direction is flexible. Correspondingly, the network device transmits the data to the terminal in the subband of the flexible time domain unit based on the second transmission direction in the case that the first transmission direction is flexible.

The third indication information may be carried in at least one of: SI, SIB, RRC signaling, or MAC layer signaling. The MAC layer signaling includes MAC CE.

FIG. 15 is a schematic diagram illustrating interaction between a terminal and a network device according to an embodiment of the disclosure.

As illustrated in FIG. 15, the network device may configure a subband for the terminal in the semi-static flexible slot, and the subband corresponds to the second transmission direction. The network device may also send the dynamic indication information to the terminal, and the dynamic indication information is used by the terminal to determine the first transmission direction corresponding to the semi-static flexible time domain unit. The terminal may determine to perform the communication operation in the flexible time domain unit in accordance with the first transmission direction or in accordance with the relationship between the first transmission direction and the second transmission direction.

In an embodiment, in the case that the first transmission direction is opposite to the second transmission direction, the terminal transmits data in the flexible time domain unit based on the first transmission direction.

In an embodiment, in the case that the first transmission direction is opposite to the second transmission direction, the terminal transmits data in the subband of the flexible time domain unit based on the second transmission direction.

In an embodiment, in the case that the first transmission direction is the same as the second transmission direction, the terminal transmits data with the frequency domain resource(s) corresponding to the flexible time domain unit based on the first transmission direction.

In an embodiment, in the case that the first transmission direction is the same as the second transmission direction, the terminal transmits data in the subband of the flexible time domain unit based on the second transmission direction.

In an embodiment, in the case that the first transmission direction is flexible, the terminal does not expect to transmit data in the flexible time domain unit before receiving the dynamic scheduling information.

In an embodiment, in the case that the first transmission direction is flexible, the terminal transmits data in the subband of the flexible time domain unit based on the second transmission direction.

It should be noted that for other contents involved in this embodiment, please refer to the description of the relevant contents in the previous embodiments, which will not be repeated here.

Corresponding to the aforementioned embodiments of the methods for performing a communication operation, the disclosure further provides embodiments of apparatuses for performing a communication operation.

FIG. 16 is a schematic block diagram illustrating an apparatus for performing a communication operation according to an embodiment of the disclosure. As illustrated in FIG. 16, the apparatus includes a processing module 1601 and a communicating module 1602.

The processing module 1601 is configured to determine a first transmission direction corresponding to a semi-static flexible time domain unit based on dynamic indication information sent by the network device, in which the flexible time domain unit is configured with a subband, and the subband corresponds to a second transmission direction.

The communication module 1602 is configured to perform a communication operation in the flexible time domain unit in accordance with the first transmission direction or in accordance with the relationship between the first transmission direction and the second transmission direction.

In an embodiment, the communication module is configured to transmit data in the flexible time domain unit based on the first transmission direction in the case that the first transmission direction is opposite to the second transmission direction.

In an embodiment, the communication module is configured to transmit data in the subband of the flexible time domain unit based on the second transmission direction in the case that the first transmission direction is opposite to the second transmission direction.

In an embodiment, the communication module is configured to determine, based on first indication information sent by a network device, to transmit data in a flexible time domain unit based on the first transmission direction or transmit data in the subband of the flexible time domain unit based on the second transmission direction, in the case that the first transmission direction is opposite to the second transmission direction,.

In an embodiment, the communication module is configured to transmit data with the frequency domain resource(s) corresponding to the flexible time domain unit based on the first transmission direction in the case that the first transmission direction is the same as the second transmission direction.

In an embodiment, the communication module is configured to transmit data in the subband of the flexible time domain unit based on the second transmission direction in the case that the first transmission direction is the same as the second transmission direction.

In an embodiment, the communication module is configured to determine, based on second indication information sent by the network device, to transmit data with the frequency domain resource(s) corresponding to the flexible time domain unit based on the first transmission direction or transmit data in the subband of the flexible time domain unit based on the first transmission direction, in the case that the first transmission direction is the same as the second transmission direction.

In an embodiment, the communication module is configured to not expect to transmit data in the flexible time domain unit before receiving dynamic scheduling information in the case that the first transmission direction is flexible.

In an embodiment, the communication module is configured to determine, based on a scheduling of the dynamic scheduling information, to transmit data based on a third transmission direction in a flexible slot, and transmit the data in a subband of the flexible slot based on the second transmission direction, in the case that the third transmission direction is the same as the second transmission direction.

In an embodiment, the communication module is configured to determine, based on a scheduling of the dynamic scheduling information, to transmit data based on a third transmission direction in a flexible slot, and transmit the data with the frequency domain resource(s) corresponding to the flexible slot based on the second transmission direction, in the case that the third transmission direction is the same as the second transmission direction.

In an embodiment, the communication module is configured to determine, based on a scheduling of the dynamic scheduling information, to transmit data based on a third transmission direction in a flexible slot, and transmit the data in the flexible time domain unit based on a direction opposite to the second transmission direction in the case that the third transmission direction is opposite to the second transmission direction.

In an embodiment, the communication module is configured to determine, based on a scheduling of the dynamic scheduling information, to transmit data based on a third transmission direction in a flexible slot, and transmit the data in the subband of the flexible time domain unit based on the second transmission direction in the case that the third transmission direction is opposite to the second transmission direction.

In an embodiment, the communication module is configured to transmit data in the subband of the flexible time domain unit based on a second transmission direction in the case that the first transmission direction is flexible.

In an embodiment, the communication module is configured to determine, based on third indication information sent by the network device, not to expect to transmit data in the flexible time domain unit before receiving dynamic scheduling information or to transmit data in the subband of the flexible time domain unit based on the second transmission direction, in the case that the first transmission direction is flexible.

In an embodiment, the dynamic indication information includes: a slot format indicator.

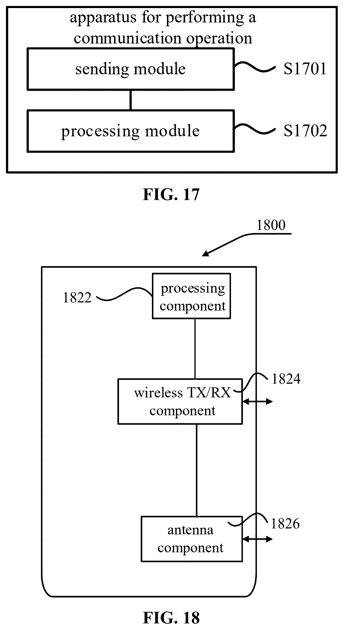

FIG. 17 is a schematic block diagram illustrating an apparatus for performing a communication operation according to an embodiment of the disclosure. As illustrated in FIG. 17, the apparatus includes a sending module 1701 and a processing module 1702.

The sending module 1701 is configured to send dynamic indication information to the terminal, in which the dynamic indication information is used by the terminal to determine a first transmission direction corresponding to a semi-static flexible time domain unit, the flexible time domain unit is configured with a subband, and the subband corresponds to a second transmission direction.

The processing module 1702 is configured to perform a communication operation in the flexible time domain unit in accordance with the first transmission direction or in accordance with the relationship between the first transmission direction and the second transmission direction.

In an embodiment, the processing module is configured to transmit data in the flexible time domain unit based on the first transmission direction in the case that the first transmission direction is opposite to the second transmission direction.

In an embodiment, the processing module is configured to transmit data in the subband of the flexible time domain unit based on the second transmission direction in the case that the first transmission direction is opposite to the second transmission direction.

In an embodiment, the sending module is further configured to send first indication information to the terminal, in which the first indication information indicates that the terminal transmits data in the flexible time domain unit based on the first transmission direction or transmits data in the subband of the flexible time domain unit based on the second transmission direction in the case that the first transmission direction is opposite to the second transmission direction.

In an embodiment, the processing module is configured to transmit data with the frequency domain resource(s) corresponding to the flexible time domain unit based on the first transmission direction in the case that the first transmission direction is the same as the second transmission direction.

In an embodiment, the processing module is configured to transmit data in the subband of the flexible time domain unit based on the second transmission direction in the case that the first transmission direction is the same as the second transmission direction.

In an embodiment, the sending module is further configured to send second indication information to the terminal, in which the second indication information indicates that the terminal transmit data with the frequency domain resource(s) corresponding to the flexible time domain unit based on the first transmission direction or transmits data in the subband of the flexible time domain unit based on the first transmission direction in the case that the first transmission direction is the same as the second transmission direction.

In an embodiment, the processing module is configured not to transmit data in the flexible time domain unit before sending dynamic scheduling information to the terminal in the case that the first transmission direction is flexible.

In an embodiment, the processing module is configured to determine, based on a scheduling of the dynamic scheduling information, to transmit data based on a third transmission direction in a flexible slot, and transmit the data in the subband of the flexible slot based on the second transmission direction in the case that the third transmission direction is the same as the second transmission direction.

In an embodiment, the processing module is configured to determine, based on a scheduling of the dynamic scheduling information, to transmit data based on a third transmission direction in a flexible slot, and transmit the data with the frequency domain resource(s) corresponding to the flexible slot based on the second transmission direction in the case that the third transmission direction is the same as the second transmission direction.

In an embodiment, the processing module is configured to determine, based on a scheduling of the dynamic scheduling information, to transmit data based on a third transmission direction in a flexible slot, and transmit data in the flexible time domain unit based on a direction opposite to the second transmission direction in the case that the third transmission direction is the same as or opposite to the second transmission direction.

In an embodiment, the processing module is configured to determine, based on a scheduling of the dynamic scheduling information, to transmit data based on a third transmission direction in a flexible slot, and transmit data in the subband of the flexible time domain unit based on the second transmission direction in the case that the third transmission direction is the same as or opposite to the second transmission direction.

In an embodiment, the processing module is configured to transmit data in the subband of the flexible time domain unit based on the second transmission direction in the case that the first transmission direction is flexible.

In an embodiment, the sending module is further configured to send third indication information to the terminal, in which the third indication information is used for indicating that the terminal does not expect to transmit data in the flexible time domain unit before receiving the dynamic scheduling information or transmits the data in the subband of the flexible time domain unit based on the second transmission direction in the case that the first transmission direction is flexible.

In an embodiment, the dynamic indication information includes: a slot format indicator.

For the apparatus embodiments, since they basically correspond to the method embodiments, for the relevant parts reference may be made to the partial description of the method embodiments. The apparatus embodiments described above are only schematic, in which the modules described as separate components may or may not be physically separated, and the components displayed as modules may or may not be physical modules. That is, they may be located in one place, or they may be distributed on multiple network modules. Some or all of the modules may be selected based on actual needs to achieve the purpose of the scheme of the embodiments. The skilled in the art may understand and implement them without paying creative work.

Embodiments of the disclosure also provide a communication system including a terminal and a network device. The terminal is configured to implement the methods for performing a communication operation performed by the terminal as described in any of the above embodiments. The network device is configured to implement the methods for performing a communication operation performed by the network device as described in any of the above embodiments.

Embodiments of the disclosure further provide a communication device including a processor and a memory for storing a computer program. When the computer program is executed by the processor, the methods for performing a communication operation performed by the terminal as described in any of the above embodiments are implemented.

Embodiments of the disclosure further provide a communication device including a processor and a memory for storing a computer program. When the computer program is executed by the processor, the methods for performing a communication operation performed by the network device as described in any of the above embodiments are implemented.

Embodiments of the disclosure further provide a computer-readable storage medium for storing a computer program. When the computer program is executed by a processor, the methods for performing a communication operation performed by the terminal as described in any of the above embodiments are implemented.

Embodiments of the disclosure further provide a computer-readable storage medium for storing a computer program. When the computer program is executed by a processor, the methods for performing a communication operation performed by the network device as described in any of the above embodiments are implemented.

FIG. 18 is a schematic block diagram illustrating a device 1800 for performing a communication operation according to an embodiment of the disclosure. The device 1800 may be a base station. As illustrated in FIG. 18, the device 1800 includes a processing component 1822, a wireless transmission/reception component 1824, an antenna component 1826, and a signal processing part specific to a wireless interface. The processing component 1822 may further include one or more processors. One of the processors in the processing component 1822 may be configured to implement the methods for performing a communication operation performed by the network device as described in any of the above embodiments.

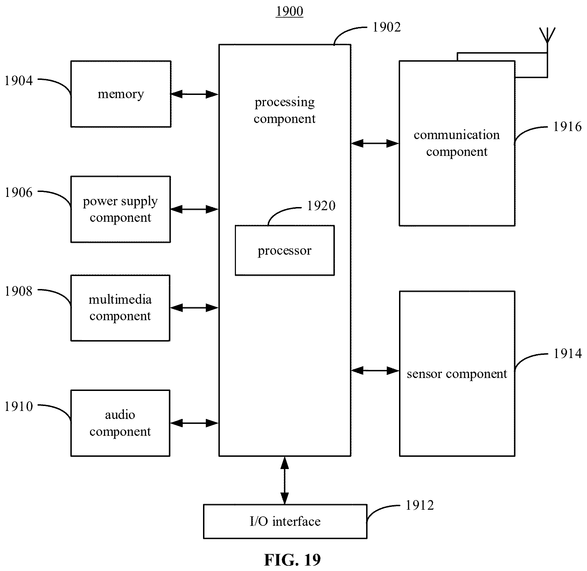

FIG. 19 is a schematic block diagram illustrating a device 1900 for performing a communication operation according to an embodiment of the disclosure. For example, the device 1900 may be a terminal, such as a mobile phone, a computer, a digital broadcast terminal, a messaging device, a game console, a tablet device, a medical device, a fitness device, a personal digital assistant, etc.

As illustrated in FIG. 19, the device 1900 may include one or more of the following components: a processing component 1902, a memory 1904, a power supply component 1906, a multimedia component 1908, an audio component 1910, an input/output (I/O) interface 1912, a sensor component 1914, or a communication component 1916.

The processing component 1902 generally controls the overall operation of the device 1900, such as operations associated with display, phone calls, data communications, camera operations, and recording operations. The processing component 1902 may include one or more processors 1920 to execute instructions to implement all or part of the steps of the methods for performing a communication operation performed by the terminal described in any of the above embodiments. In addition, the processing component 1902 may include one or more modules to facilitate the interaction between the processing component 1902 and other components. For example, the processing component 1902 may include a multimedia module to facilitate the interaction between the multimedia component 1908 and the processing component 1902.

The memory 1904 is configured to store various types of data to support the operations on the device 1900. Examples of such data include instructions for any application or method operating on the device 1900, contact data, phonebook data, messages, pictures, videos, etc.

The power supply component 1906 provides power to the various components of the device 1900. The power supply component 1906 may include a power management system, one or more power supplies, and other components associated with generating, managing, and distributing power to the device 1900.

The multimedia component 1908 includes a screen that provides an output interface between the device 1900 and the user. In some embodiments, the screen may include a liquid crystal display (LCD) and a touch panel (TP). If the screen includes a touch panel, the screen may be implemented as a touch screen to receive input signals from the user.

The audio component 1910 is configured to output and/or input audio signals. For example, the audio component 1910 includes a microphone (MIC), and when the device 1900 is in an operating mode, such as a call mode, a recording mode, and a speech recognition mode, the microphone is configured to receive an external audio signal. The received audio signal may be further stored in the memory 1904 or sent via the communication component 1916. In some embodiments, the audio component 1910 also includes a speaker for outputting audio signals.

The I/O interface 1912 provides an interface between the processing component 1902 and peripheral interface modules, such as keyboards, click wheels, buttons, etc. These buttons may include, but are not limited to, home button, volume button, start button, or lock button.

The sensor component 1914 includes one or more sensors for providing status assessment of various aspects for the device 1900.

The communication component 1916 is configured to facilitate wired or wireless communication between the device 1900 and other devices. The device 1900 may access a wireless network based on a communication standard, such as wireless fidelity (WiFi^{™}), second generation (2G), third generation (3G), fourth generation (4G) long term evolution (LTE), fifth generation (5G) new radio (NR), or a combination thereof. In an example embodiment, the communication component 1916 receives a broadcast signal or broadcast-related information from an external broadcast management system via a broadcast channel. In an exemplary embodiment, the communication component 1916 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the device 1900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the methods for performing a communication operation performed by the terminal as described in any of the above embodiments.

In an example embodiment, a non-transitory computer-readable storage medium including instructions is also provided, such as a memory 1904 including instructions, and the instructions may be executed by the processor 1920 of the device 1900 to implement the methods for performing a communication operation described in any of the above embodiments. For example, the non-transitory computer-readable storage medium may be a read-only memory (ROM), a random-access memory (RAM), a CD-ROM, a magnetic tape, a floppy disk, an optical data storage device, etc.

Those skilled in the art will readily appreciate other embodiments of the disclosure after considering the specification and practicing the disclosure herein. The disclosure is intended to cover any variations, uses, or adaptations of the disclosure that follow the general principles of the disclosure and include common knowledge or customary techniques in the art that are not disclosed in the disclosure. The description and examples are to be considered illustrative only, and the true scope and spirit of the disclosure are indicated by the following claims.

It should be understood that the disclosure is not limited to the exact structures that have been described above and shown in the drawings, and that various modifications and changes may be made without departing from the scope thereof. The scope of the disclosure is limited only by the appended claims.

## Claims

1. A method for performing a communication operation, performed by a terminal, the method comprising:
determining a first transmission direction corresponding to a semi-static flexible time domain unit based on dynamic indication information sent by a network device, wherein the flexible time domain unit is configured with a subband, and the subband corresponds to a second transmission direction; and
performing the communication operation in the flexible time domain unit in accordance with the first transmission direction or in accordance with a relationship between the first transmission direction and the second transmission direction.

2. The method of claim 1, wherein performing the communication operation in the flexible time domain unit in accordance with the relationship between the first transmission direction and the second transmission direction comprises:
in a case that the first transmission direction is opposite to the second transmission direction, transmitting data in the flexible time domain unit based on the first transmission direction.

3. The method of claim 1, wherein performing the communication operation in the flexible time domain unit in accordance with the relationship between the first transmission direction and the second transmission direction comprises:
in a case that the first transmission direction is opposite to the second transmission direction, transmitting data in the subband of the flexible time domain unit based on the second transmission direction.

4. The method of any one of claims 1 to 3, wherein performing the communication operation in the flexible time domain unit in accordance with the relationship between the first transmission direction and the second transmission direction comprises:
determining, based on first indication information sent by the network device, to transmit data in the flexible time domain unit based on the first transmission direction or to transmit data in the subband of the flexible time domain unit based on the second transmission direction, in a case that the first transmission direction is opposite to the second transmission direction.

5. The method of claim 1, wherein performing the communication operation in the flexible time domain unit in accordance with the relationship between the first transmission direction and the second transmission direction comprises:
in a case that the first transmission direction is the same as the second transmission direction, transmitting data with a frequency domain resource corresponding to the flexible time domain unit based on the first transmission direction.

6. The method of claim 1, wherein performing the communication operation in the flexible time domain unit in accordance with the relationship between the first transmission direction and the second transmission direction comprises:
in a case that the first transmission direction is the same as the second transmission direction, transmitting data in the subband of the flexible time domain unit based on the second transmission direction.

7. The method of any one of claims 1, 5 to 6, wherein performing the communication operation in the flexible time domain unit in accordance with the relationship between the first transmission direction and the second transmission direction comprises:
determining, based on second indication information sent by the network device, to transmit data with a frequency domain resource corresponding to the flexible time domain unit based on the first transmission direction or to transmit data in the subband of the flexible time domain unit based on the first transmission direction, in a case that the first transmission direction is the same as the second transmission direction.

8. The method of claim 1, wherein performing the communication operation in the flexible time domain unit in accordance with the first transmission direction comprises:
in a case that the first transmission direction is flexible, not expecting to transmit data in the flexible time domain unit before receiving dynamic scheduling information.

9. The method of claim 8, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data in a subband of the flexible slot based on the second transmission direction in a case that the third transmission direction is the same as the second transmission direction.

10. The method of claim 8, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data with a frequency domain resource corresponding to the flexible slot based on the second transmission direction in a case that the third transmission direction is the same as the second transmission direction.

11. The method of claim 8, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data in the flexible time domain unit based on the third transmission direction in a case that the third transmission direction is opposite to the second transmission direction.

12. The method of claim 8, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data in the subband of the flexible time domain unit based on the second transmission direction in a case that the third transmission direction is opposite to the second transmission direction.

13. The method of claim 1, wherein performing the communication operation in the flexible time domain unit in accordance with the first transmission direction comprises:
in a case that the first transmission direction is flexible, transmitting data in the subband of the flexible time domain unit based on the second transmission direction.

14. The method of any one of claims 1, 8 to 13, wherein performing the communication operation in the flexible time domain unit in accordance with the first transmission direction comprises:
determining, based on third indication information sent by the network device, not to expect to transmit data in the flexible time domain unit before receiving dynamic scheduling information or to transmit data in the subband of the flexible time domain unit based on the second transmission direction, in a case that the first transmission direction is flexible.

15. The method of any one of claims 1 to 14, wherein the dynamic indication information comprises a slot format indicator.

16. A method for performing a communication operation, performed by a network device, the method comprising:
sending dynamic indication information to a terminal, wherein the dynamic indication information indicates a first transmission direction corresponding to a semi-static flexible time domain unit, the flexible time domain unit is configured with a subband, and the subband corresponds to a second transmission direction; and
performing the communication operation in the flexible time domain unit in accordance with the first transmission direction or in accordance with a relationship between the first transmission direction and the second transmission direction.

17. The method of claim 16, wherein performing the communication operation in the flexible time domain unit in accordance with the relationship between the first transmission direction and the second transmission direction comprises:
in a case that the first transmission direction is opposite to the second transmission direction, transmitting data in the flexible time domain unit based on the first transmission direction.

18. The method of claim 16, wherein performing the communication operation in the flexible time domain unit in accordance with the relationship between the first transmission direction and the second transmission direction comprises:
in a case that the first transmission direction is opposite to the second transmission direction, transmitting data in the subband of the flexible time domain unit based on the second transmission direction.

19. The method of any one of claims 16 to 18, further comprising:
sending first indication information to the terminal, wherein the first indication information indicates that the terminal transmits data in the flexible time domain unit based on the first transmission direction or transmits data in the subband of the flexible time domain unit based on the second transmission direction, in a case that the first transmission direction is opposite to the second transmission direction.

20. The method of claim 16, wherein performing the communication operation in the flexible time domain unit in accordance with the relationship between the first transmission direction and the second transmission direction comprises:
in a case that the first transmission direction is the same as the second transmission direction, transmitting data with a frequency domain resource corresponding to the flexible time domain unit based on the first transmission direction.

21. The method of claim 16, wherein performing the communication operation in the flexible time domain unit in accordance with the relationship between the first transmission direction and the second transmission direction comprises:
in a case that the first transmission direction is the same as the second transmission direction, transmitting data in the subband of the flexible time domain unit based on the second transmission direction.

22. The method of any one of claims 16, 20 to 21, further comprising:
sending second indication information to the terminal, wherein the second indication information indicates that the terminal transmits data with a frequency domain resource corresponding to the flexible time domain unit based on the first transmission direction or transmits data in the subband of the flexible time domain unit based on the first transmission direction, in a case that the first transmission direction is the same as the second transmission direction.

23. The method of claim 16, wherein performing the communication operation in the flexible time domain unit in accordance with the first transmission direction comprises:
in a case that the first transmission direction is flexible, not transmitting data in the flexible time domain unit before sending dynamic scheduling information to the terminal.

24. The method of claim 23, wherein performing the communication operation in the flexible time domain unit in accordance with the first transmission direction further comprises:
determining, based on a scheduling of the dynamic scheduling information, to transmit the data in a flexible slot based on a third transmission direction, and transmitting the data in a subband of the flexible slot based on the second transmission direction in a case that the third transmission direction is the same as the second transmission direction.

25. The method of claim 23, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data with a frequency domain resource corresponding to the flexible slot based on the second transmission direction in a case that the third transmission direction is the same as the second transmission direction.

26. The method of claim 23, wherein performing the communication operation in the flexible time domain unit in accordance with the first transmission direction further comprises:
determining, based on a scheduling of the dynamic scheduling information, to transmit data in a flexible slot based on a third transmission direction; and transmitting the data in the flexible time domain unit based on the third transmission direction in a case that the third transmission direction is opposite to the second transmission direction.

27. The method of claim 23, wherein performing the communication operation in the flexible time domain unit in accordance with the first transmission direction further comprises:
determining, based on a scheduling of the dynamic scheduling information, to transmit data in a flexible slot based on a third transmission direction, and transmitting the data in the subband of the flexible time domain unit based on the second transmission direction in a case that the third transmission direction is opposite to the second transmission direction.

28. The method of claim 16, wherein performing the communication operation in the flexible time domain unit in accordance with the first transmission direction comprises:
in a case that the first transmission direction is flexible, transmitting data in the subband of the flexible time domain unit based on the second transmission direction.

29. The method of any one of claims 16, 23 to 28, further comprising:
sending third indication information to the terminal, wherein the third indication information indicates that the terminals does not to transmit data in the flexible time domain unit before sending dynamic scheduling information to the terminal or transmits data in the subband of the flexible time domain unit based on the second transmission direction, in a case that the first transmission direction is flexible.

30. The method of any one of claims 16 to 29, wherein the dynamic indication information comprises a slot format indicator.

31. An apparatus for performing a communication operation, comprising:
a processing module, configured to determine a first transmission direction corresponding to a semi-static flexible time domain unit based on dynamic indication information sent by a network device, wherein the flexible time domain unit is configured with a subband, and the subband corresponds to a second transmission direction; and
a communication module, configured to perform the communication operation in the flexible time domain unit in accordance with the first transmission direction or in accordance with a relationship between the first transmission direction and the second transmission direction.

32. An apparatus for performing a communication operation, comprising:
a sending module, configured to send dynamic indication information to a terminal, wherein the dynamic indication information is used by the terminal to determine a first transmission direction corresponding to a semi-static flexible time domain unit, wherein the flexible time domain unit is configured with a subband, and the subband corresponds to a second transmission direction; and
a processing module, configured to perform the communication operation in the flexible time domain unit in accordance with the first transmission direction or in accordance with a relationship between the first transmission direction and the second transmission direction.

33. A communication system, comprising a terminal and a network device, wherein the terminal is configured to implement the method for performing a communication operation of any one of claims 1 to 15, and the network device is configured to implement the method for performing a communication operation of any one of claims 16 to 30.

34. A communication device, comprising:
a processor; and
a memory for storing a computer program;
wherein when the computer program is executed by a processor, the method for performing a communication operation of any one of claims 1 to 15 is implemented.

35. A communication device, comprising:
a processor; and
a memory for storing a computer program;
wherein when the computer program is executed by a processor, the method for performing a communication operation of any one of claims 16 to 30 is implemented.

36. A computer-readable storage medium, for storing a computer program, wherein when the computer program is executed by a processor, the method for performing a communication operation of any one of claims 1 to 15 is implemented.

37. A computer-readable storage medium, for storing a computer program, wherein when the computer program is executed by a processor, the method for performing a communication operation of any one of claims 16 to 30 is implemented.
